Europäisches Patentamt

European Patent Office

Office européen des brevets

(19)

(11) **EP 0 916 114 B1**

(12) **FASCICULE DE BREVET EUROPEEN**

(45) Date de publication et mention
de la délivrance du brevet:
**14.11.2001 Bulletin 2001/46**

(21) Numéro de dépôt: **97936734.9**

(22) Date de dépôt: **04.08.1997**

(51) Int Cl.[7]: **G05B 13/02**

(86) Numéro de dépôt international:
**PCT/FR97/01447**

(87) Numéro de publication internationale:
**WO 98/06014 (12.02.1998 Gazette 1998/06)**

(54) **PROCEDE D'EVALUATION OU DE MESURE DU RISQUE ENVIRONNEMENTAL LIE AUX DIFFERENTES ACTIVITES HUMAINES, NOTAMMENT INDUSTRIELLES, ET SES APPLICATIONS**

VERFAHREN ZUR AUSWERTUNG ODER MESSUNG DES UMWELTRISIKOS IN VERBINDUNG MIT VERSCHIEDENEN MENSCHLICHEN, INSBESONDERE INDUSTRIELLEN TÄTIGKEITEN UND ANWENDUNGEN DESSELBEN

METHOD FOR ASSESSING OR MEASURING THE ENVIRONMENTAL HAZARD RELATED TO VARIOUS HUMAN ACTIVITIES, PARTICULARLY INDUSTRIAL ACTIVITIES, AND USES THEREOF

(84) Etats contractants désignés:
**BE DE DK ES FR GB IT NL**

(30) Priorité: **05.08.1996 FR 9609865**

(43) Date de publication de la demande:
**19.05.1999 Bulletin 1999/20**

(73) Titulaire: **Bio Intelligence Service
75016 Paris (FR)**

(72) Inventeur: **LABOUZE, Eric
F-75013 Paris (FR)**

(74) Mandataire: **Hurwic, Aleksander et al
Cabinet Orès S.A.,
6, Avenue de Messine
75008 Paris (FR)**

(56) Documents cités:
**US-A- 5 033 004**        **US-A- 5 148 370**
**US-A- 5 467 285**

- **J.KORTMAN ET AL: "TOWARDS AN ENVIROMENTAL DESIGN TOOLBOX FOR COMPLEX PRODUCTS " INTERNATIONAL CONFERENCE ON CLEAN ELECTRONIVS PRODUCTS AND TECHNOLOGY, 9 octobre 1995, UK, pages 35-40, XP002044739**
- **K.SCHUSTER: "LOGISTIKGERECHTE KONZEPTION SOWIE REALISIERUNG DER PRODUKTVERPACKUNG UND EIN PRAKTISCHER ANWENDUNGSFALL" OR SPEKTRUM, 1991, GERMANY, pages 254-263, XP002044740**
- **M.KEYES ET AL: "MULTI-LEVEL CONTROL AND OPTIMIZATION METHODS FOR DESALINATION PLANTS" AUTOMATIC CONTROL IN PETROLEUM,PETROCHEMICAL AND DESALINATION INDUSTRIES, 6 janvier 1986, KUWAIT, pages 165-170, XP002044741**

**Description**

La présente invention est relative à un procédé de mesure et/ou d'évaluation du risque environnemental, lié aux différentes activités humaines (techniques ou industrielles).

La présente invention est également relative aux applications de ce procédé, notamment dans la modification de la préparation de produits manufacturés, de la mise en oeuvre de procédés industriels, de la fourniture de services matériels et de la mise en place de systèmes de production industrielle, dont la qualité environnementale est significativement améliorée.

Les flux de matière et d'énergie mis en oeuvre par les activités intentionnelles de l'homme modifient les cycles biogéochimiques naturels. Ces modifications (non intentionnelles) font aujourd'hui peser sur la planète des menaces écologiques globales que, jusqu'à présent, aucune approche scientifique n'a permis de quantifier, ni de prédire (*Europe's Environment. The Dobris Assessment* ; *Ed. D. Stanner and Ph. Bruneau, European Environment Agency, Copenhagen*, *1995; Humans as Components of ecosystems. Ed. Mark J. McDonnell and Stewart T.A. Pickett, Springer-Verlag, New-York, 1993*).

La problématique générale de la mesure ou de l'évaluation du risque environnemental, lié aux différentes activités humaines, consiste à élucider les fonctions d'état de l'environnement sensibles à une modification (d'origine anthropique) des critères de répartition de la matière et de l'énergie au sein des divers milieux de l'environnement (air, eau, sol), puisqu'une telle modification est, en effet, le facteur causal initial des perturbations induites par l'homme sur l'état de la planète.

La démarche courante, aujourd'hui, consiste à définir des fonctions d'état de l'environnement qui reflètent des fonctions de « dommages » (par exemple le réchauffement planétaire, la déplétion de la couche d'ozone, l'épuisement des ressources naturelles, la diminution de la biodiversité, l'atteinte à la santé de l'homme, etc.), c'est-à-dire des impacts écologiques futurs induits par une modification des critères de répartition de la matière et de l'énergie au sein des écosystèmes.

Or, à l'échelle globale, les impacts écologiques futurs induits par une modification des critères de répartition de la matière et de l'énergie à un instant donné sont intrinsèquement non prédictibles (en tout état de cause, parce que ces impacts futurs dépendent évidemment des modifications anthropiques futures, qui sont elles-mêmes non prédictibles).

Ainsi, les approches actuelles sont, dans le meilleur des cas, adaptées pour caractériser certains impacts environnementaux particuliers (par exemple le forçage radiatif des gaz à effet de serre, l'effet eutrophisant de substances nutritives relarguées dans les eaux douces, le potentiel carcinogène d'une substance, etc.), mais ne permettent pas de décrire la modification globale de l'état de l'environnement sous l'effet des activités humaines (quelle que puisse être l'échelle spatiale ou temporelle de référence).

Or, il est particulièrement important de disposer d'outils de mesure et d'une grandeur physique universelle représentative des effets induits par les activités humaines (constituant un système S1) sur l'état de l'environnement terrestre (constituant un système S2), et donc du danger potentiel ou du risque provoqué par une modification de l'équilibre écologique global due aux activités humaines dans ses différents secteurs d'activité.

C'est pourquoi la Demanderesse s'est donnée pour but de pourvoir à un procédé de mesure et/ou d'évaluation du risque environnemental, qui découle de tout type d'activité humaine modifiant, directement ou indirectement, les critères de répartition de la matière ou de l'énergie au sein de l'écosphère. Un tel risque a été dénommé risque anthropique ou risque anthropogénique (« *anthropogenic hazard* » en anglais) et ne prend en compte que les modifications dues aux activités humaines procédant (directement ou indirectement) à des échanges de matière et/ou d'énergie avec l'environnement.

Contrairement aux approches actuelles, la présente invention a essentiellement pour objet un procédé de mesure de la modification physique de l'état global de l'environnement, sous l'effet des activités humaines, laquelle modification n'est pas caractérisée par une fonction de dommage explicative des conséquences écologiques futures, mais par une fonction d'état explicative de la quantité de transformation physique entre deux états de l'environnement, lesquels états sont caractérisés par un ensemble de variables d'état (au sens thermodynamique), lesquelles variables sont représentatives des critères de répartition de la matière et de l'énergie.

On connaît du Brevet US-5 033 004, un procédé comprenant les étapes d'extraction de matières premières nécessaires à une fabrication, de traitement de ces matières premières et la fabrication de produits semi-finis qui sont ensuite transformés.

Ce procédé permet d'optimiser la logistique d'une production, mais ne permet pas de tenir compte des impacts environnementaux.

L'invention concerne un procédé de fabrication permettant de tenir compte du risque environnemental et comprenant les étapes :

a) d'extraction de matières premières nécessaires à une fabrication ;

b) de traitement de matières premières et la fabrication de produits semi-finis ;

c) de transformation des produits semi-finis obtenus à l'étape b) caractérisés en ce qu'ils comportent en outre les étapes préalables de :

d) mesure de flux d'échange de matières et d'énergie entre le milieu naturel et les produits fabriqués aux étapes a), b) et c) ; et

e) sélection des étapes a), b) et c) minimisant les flux d'échange de matières et d'énergie avec l'environnement.

L'invention a aussi pour objet un procédé de fabrication caractérisé en ce que lors de l'étape e) on assure la perturbation des divers étapes de fabrication, de manière à trouver le procédé correspondant aux flux minimaux d'échange de matières et d'énergie avec l'environnement.

L'invention a également pour objet un procédé caractérisé en ce que l'étape de mesure du flux d'échange de matières et d'énergie avec le milieu tient compte de la réalisation de l'outil industriel nécessaire à la mise en oeuvre du procédé.

L'invention a aussi pour objet un procédé caractérisé en ce que l'étape de mesure du flux d'échange de matières et d'énergie avec le milieu tient compte de la destruction ou de la récupération après l'usage de l'objet fabriqué, de son emballage et de l'outil industriel nécessaire à sa fabrication ou à son transport.

L'invention a également pour objet un procédé caractérisé en ce que l'étape de mesure du flux d'échange de matières et d'énergie avec le milieu tient compte du recyclage des produits usés.

L'invention a aussi pour objet un procédé caractérisé en ce que l'étape de mesure du flux d'échange de matières et d'énergie avec le milieu est calculée séparemment pour chaque étape du procédé.

L'invention a également pour objet un procédé caractérisé en ce que l'étape de mesure des flux d'échange de matières et d'énergie avec le milieu s'effectue globalement pour le procédé avec compensation du flux entrant par le flux sortant.

L'invention a aussi pour objet un procédé caractérisé en ce que les flux de matières et d'énergie sont affectés des coefficients rendant compte de leur nocivité pour leur environnement.

L'invention a également pour objet un procédé caractérisé en ce que l'étape de mesure de flux d'échange de matières et d'énergie avec l'environnement comprend :

(1) la sélection d'une unité fonctionnelle de référence ($Uf_0$) décrivant un système Slo ;

(2) la sélection d'une unité fonctionnelle $UF_n$ avec $n = i$, parmi un nombre $n$ d'unités fonctionnelles (UF), dont les caractéristiques sont identiques ou similaires et décrivant un système S1, soit : $S1 = \{UF_1, UF_2,..., UF_i, ..., Uf_n\}$;

(3) la sélection d'un ensemble $V$, composé de $N$ variables d'état indépendantes ou paramètres de mesure $\nu$, pouvant être sous différents états dans un système S2, correspondant à l'environnement, lesquels états sont induits par lesdites unités fonctionnelles, soit : $V = \{\nu_1, \nu_2,..., \nu_j,..., \nu_N\}$;

(4) la mesure de chacun de ces paramètres dans S2 en référence à chaque unité fonctionnelle sélectionnée en (1) et (2) : soit, $\forall\, i \in \{o, 1,..., n\}$, $S2\,(UF_i) = \{\nu_1(UF_i), \nu_2(UF_i),..., \nu_j(UF_i), ..., \nu_N(UF_i)\}$, où $\nu_j(UF_i)$ représente la mesure quantitative du paramètre $\nu_j$, en référence à $Uf_i$ ;

(5) le calcul de la quantité de transformation physique $H$j,i ou entropie d'une variation élémentaire de l'environnement S2, pour chaque paramètre $\nu_j$, en relation avec l'unité fonctionnelle ($UF_i$) sélectionnée en (2), par rapport à l'unité fonctionnelle de référence ($UF_0$), $H$ répondant à la formule suivante:

$$Hj,i = H(\nu_j(UF_i)) = A - B.[((\nu_j(UF_i)/\nu_j(UF_0) + \nu_j(UF_i))).\log(\nu_j(UF_i) / (\nu_j(UF_0) +$$

$$\nu_j(UF_i))) + (\nu_j(UF_0) / (\nu_j(UF_0) + \nu_j(UF_i))).\log(\nu_j(UF_0)/ (\nu_j(UF_0) + \nu_j(UF_i)))],$$

dans laquelle A et B représentent des constantes dimensionnelles de la fonction H ;

(6) le calcul du risque anthropique $R$j,i, pour chaque paramètre $\nu_j$, pour l'unité fonctionnelle ($UF_i$) sélectionnée en (2), par rapport à l'unité fonctionnelle de référence ($UF_o$), $R$j,i répondant à la formule suivante :

$$Rj,i\,(UF_o \rightarrow UF_i) = Hj,i_{max} - Hj,i,\ \text{si}\ \nu_j(UF_i) \geq \nu_j(UF_o)$$

ou

$$Rj,i\,(UF_o \rightarrow UF_i) = Hj,i - Hj,i_{max},\ \text{si}\ \nu_j(UF_i) \leq \nu_j(UF_o),$$

dans laquelle $Hj,i_{max}$ représente la valeur maximale de $Hj,i$ en faisant varier la valeur de $\nu_j(UF_i)$ entre 0 et $+\infty$, lorsque la valeur de $\nu_j(UF_0)$ est fixée, et

(7) le calcul du risque anthropique total produit par les N variables d'état de l'ensemble $V$, conformément à la formule suivante :

$$R\mathrm{i}\ (\mathrm{UF_o} \rightarrow \mathrm{UF_i}) = \sum_{j=1}^{j=N} Rj,i(UF_o \rightarrow UF_i) \, ,$$

les étapes (2) à (7) étant répétées *n* fois, et

(8) la modification d'au moins un paramètre physique caractérisant l'unité fonctionnelle sélectionnée.

L'invention a aussi pour objet un procédé caractérisé en ce que les constantes A et B selon l'étape (5) sont respectivement égales à 0 et 1, la fonction logarithme est en base 2 et $Hj,i_{max}$ selon l'étape (6) est égale à 1, ce qui permet d'exprimer $Hj,i$ et $Rj,i$ en bits.

L'invention a également pour objet un procédé caractérisé en ce qu'il comprend en outre, entre l'étape de calcul du risque anthropique $Rj,i$ pour chaque paramètre $\nu_j$ et l'étape de calcul du risque anthropique total, une étape de calcul du risque anthropique associé à un sous-ensemble $V'$ de $V$, composé d'un nombre $K$ de paramètres $\nu_k$ ($K \leq N$), pour l'unité fonctionnelle ($UF_i$) sélectionnée à l'étape (2), par rapport à l'unité fonctionnelle de référence ($UF_0$), conformément à la formule suivante :

$$R\mathrm{V'},\mathrm{i}\ (\mathrm{UF_o} \rightarrow \mathrm{UF_i}) = \sum_{k=1}^{k=K}\ R\mathrm{k},\mathrm{i}\ (\mathrm{UF_o} \rightarrow \mathrm{UF_i}), (\text{étape 6'}).$$

L'invention a également pour objet un procédé caractérisé en ce que la valeur obtenue à l'étape (7) est renormalisée.

Les flux engendrés par l'activité humaine ont une influence globalement néfaste sur la nature. La Demanderesse a découvert que, de manière surprenante, les nuissànces engendrées pour l'environnement par une activité humaine est une fonction croissante avec les flux de matières et d'énergie mis en oeuvre par cette activité.

L'invention se propose d'offrir pour un résultat égal (UF) un procédé de fabrication, de transformation, de transport ou analogue le moins néfaste pour l'environnement.

Un procédé selon l'invention de fabrication, ou analogue comporte une étape d'évaluation des flux engendrés par divers procédés disponibles, procédés à modifier ou procédés envisagés, et une étape de choix global ou d'un ensemble de choix élémentaires du procédé minimisant les flux engendrés avec l'environnement.

Dans une première variante de réalisation, les nuisances de tous les flux sont considérées comme équivalentes.

Dans un deuxième exemple de réalisation, les flux sont affectés d'un coefficient reflétant leur nocivité pour l'environnement. Par exemple, la libération de CO ou de $Cl_2$, dans l'atmosphère, sera considérée comme plus dommageable pour l'environnement que la libération de $CO_2$ ou de $H_2O$.

Au sens de la présente invention, on entend par :

- ***risque environnemental*** : l'ensemble des effets ultimes (à l'échelle globale de la planète et à long terme) d'une modification de l'état de l'environnement sous l'effet d'une activité humaine ; plus les effets ultimes sont incertains, plus le risque environnemental est grand.
- ***activité humaine*** : une activité intentionnelle remplissant une fonction ou satisfaisant un besoin, tout en procédant à des échanges de matières et d'énergie avec le milieu environnant, lesquels échanges résultent de la mise en oeuvre d'au moins un procédé technique.
- ***critères de répartition de la matière et de l'énergie :*** les stocks et les flux de matières et d'énergie au sein des divers milieux de l'environnement (air, eau, sol, sous-sol) ; une modification anthropique de ces critères de répartition consiste par exemple, mais de manière non limitative, à prélever des ressources naturelles dans les stocks de matières renouvelables (par exemple le bois) et non renouvelables (par exemple les combustibles fossiles) constitutifs des réserves naturelles, à rejeter de nouvelles substances dans l'environnement (par exemple les chlorofluorocarbures), ou bien à modifier la cinétique des échanges de matière entre les divers milieux de l'environnement (modification des flux de substances naturelles).
- ***système caractéristique d'une activité humaine*** (S1) : c'est l'ensemble des opérations qui concourent à remplir la fonction que l'on souhaite analyser et qui est définie par l'unité fonctionnelle ; tout groupe d'opérations, remplissant une fonction donnée, peut être décrit comme un système ; un tel système est défini non seulement par son contenu (c'est-à-dire les opérations qui ont lieu à l'intérieur de ce système), mais aussi par ses limites ou frontières, et par ses entrants *(input),* qui proviennent de l'environnement (matières premières, énergie), et les sortants *(output),* qui sont rejetées dans l'environnement (effluents gazeux et liquides, déchets solides, etc.). Les flux de matière et d'énergie qui traversent les frontières du système S1 sont relatifs à des substances ou des flux d'énergie puisés ou rejetés dans l'environnement du système, lequel environnement est lui-même décrit comme formant un système S2.

- ***unité fonctionnelle:*** une description physique d'une fonction remplie par une activité humaine procédant à des échanges de matière et/ou d'énergie avec l'environnement ; il s'agit de déterminer un élément de mesure de performance de la fonction remplie par un système représentatif d'une activité humaine. Une telle performance est physiquement représentative d'un changement d'état d'entrants, et/ou d'un processus de transformation physique, et/ou de la production de sortants fonctionnels.

L'objectif premier d'une unité fonctionnelle est de fournir une référence à laquelle les flux entrants et sortants de matière et/ou d'énergie à travers le système représentatif d'une activité humaine sont, directement ou indirectement, liés.

Par exemple, mais de manière non limitative, on peut citer à titre d'exemple d'unités fonctionnelles (UF) :

* un produit ou une catégorie de produits : l'UF d'un système d'emballage peut être définie comme la quantité de matériau nécessaire pour contenir une quantité donnée de produit emballé livré au consommateur ; l'UF d'un système de peinture peut être définie comme l'unité de surface protégée pendant une période spécifiée ; l'UF d'une lessive peut être définie comme une quantité de linge sale lavé avec une certaine qualité de résultat ; etc. ; l'UF d'un bâtiment peut être définie comme une quantité de surface d'habitation utile, etc.

* un service matériel : l'UF d'une activité de transport peut être définie comme une quantité de marchandise déplacée sur une certaine distance ; l'UF de l'activité de distribution d'énergie peut être définie comme une quantité de puissance utile disponible sur le lieu d'utilisation ; etc.

* un procédé : l'UF d'une unité de traitement de déchets peut être définie comme une quantité de déchets traités avec une certaine qualité de résultats ; etc.

* un système de production industrielle : l'UF de la filière de production du PVC peut être définie comme une quantité de PVC produite ; etc.

* un secteur d'activité : l'UF de l'ensemble des procédés industriels mis en oeuvre pour satisfaire les besoins matériels d'une population donnée sur une période donnée peut être définie par une zone géographique délimitée par des frontières physiques ou géopolitiques, à l'intérieur desquelles l'ensemble des activités humaines procèdent à des échanges de matière et d'énergie avec l'environnement (une ville, une région, un pays, un groupe de pays).

Cette méthode de sélection d'une UF permet de prendre en compte de nombreux facteurs de différence entre des systèmes comparables (par exemple, mais de manière non limitative, des systèmes interchangeables). L'UF joue donc un rôle déterminant dès lors que l'analyse a une visée comparative.

Un système humain peut avoir un grand nombre de fonctions possibles et la fonction choisie pour définir une activité humaine dépend de l'objectif et de l'utilisation finale du résultat. L'unité fonctionnelle correspondante doit être définie et mesurable. Les caractéristiques d'une UF sont d'une part des critères de discrimination (tels que le temps, l'espace, la nature physico-chimique, ou la fonction) et d'autre part des paramètres (ou variables) physiques observables, définissant sans ambiguïté l'UF.

- ***variables d'état (observables) ou paramètres de mesure*** : quantités de matière et quantités d'énergie qui franchissent les frontières du système Si ci-dessus défini, ou variables « explicatives » de ces quantités ; on peut citer, à titre non limitatif, les substances chimiques, les produits manufacturés, les produits ayant une valeur d'usage, les produits bruts et les matières premières ; certaines de ces matières constituent une variable dite « explicative » d'une autre matière, difficilement mesurable ; par exemple, pour évaluer globalement les quantités de matière et les quantités d'énergie mobilisées par les transports, il est parfois plus facile de sélectionner comme paramètres v, le nombre de voitures en circulation et le nombre de kilomètres parcourus (N = 2), alors qu'en règle générale, il est préférable de sélectionner comme paramètres v, l'ensemble complet de tous les flux de matières et d'énergie qui franchissent les frontières du système S1 (en entrée et en sortie); dans ce dernier cas, le nombre de paramètres sera différent. La mesure de ces paramètres est effectuée de préférence dans S2 (environnement) ; toutefois ces paramètres sont sélectionnés pour mesurer le risque additionnel généré par un système S1 caractérisé par au moins une unité fonctionnelle (par rapport à un système S10 caractérisé par une unité fonctionnelle $UF_o$) et caractérisent ces unités fonctionnelles.

- **_état d'un système_** : l'état d'un système est décrit en énumérant les valeurs mesurées pour chacun des N paramètres ν analysés ; l'état du système est caractérisé par _N_ états élémentaires ; chaque état élémentaire de S (que ce soit S1 ou S2), soit S($\nu_j$)) est décrit par la valeur de chacun des _N_ paramètres de mesure (ν$_j$, j compris entre 1 et _N_); une variation d'état élémentaire d'un système S décrit un changement d'état élémentaire d'un système $S_0$ vers un système $S_1$ (soit la transformation de $S_0(\nu_j) = \nu_0$ en $S_1(\nu_j)=\nu_1$); lorsque l'on considère l'ensemble formé de l'union des deux systèmes $S_0$ et $S_1$, la fonction de distribution de chacun des deux états possibles dans lequel l'ensemble peut se trouver est donnée, pour chacun des états élémentaires, par la formule $p(\nu_0)=\nu_0/\nu_0+\nu_1$ et $p(\nu_1)$ $=\nu_1/\nu_0+\nu_1$, pour chacun des deux états $S_0$ et $S_1$ respectivement ou plus généralement $p(\nu_j)=\nu_j(UF_i)/\nu_j(UF_i)+\nu_j(UF_o)$.
- **_entropie H_** : définie par la fonction H de Boltzmann ; description physique de la variation d'état élémentaire de l'environnement (système S2), pour chaque paramètre ν, sous l'influence de la transformation de l'unité fonctionnelle de référence (système S1o) en une unité fonctionnelle caractéristique du système S1; sa caractérisation passe par la détermination de la fonction de distribution de deux états du système S2 parmi les états possibles dans lesquels ce système peut se trouver, en fonction de l'état élémentaire du système S1 et du système S10.
- **_Hmax_** : représente la valeur maximale de l'entropie H pour chaque paramètre ν, en faisant varier la valeur de $\nu_1$ pour une valeur donnée de $\nu_0$.
- **_risque anthropique_** : défini par la formule _R_ ; description physique des effets dus au passage d'une unité fonctionnelle de référence à une autre unité fonctionnelle, sur l'environnement.

Conformément au procédé de mesure selon l'invention et dans le cas où, par exemple N = 2, on évaluera la quantité de transformation de deux paramètres par rapport à une unité fonctionnelle de référence ($UF_0$) et une unité fonctionnelle ($UF_1$) et ce, dans S2 (environnement).

Dans la mesure où l'entropie est une fonction additive, _R_ est aussi additive au sens où si $R_{j,i}$ et $R_{j',i}$ sont les valeurs obtenues pour deux variables (ν$_j$ et ν$_{j'}$) caractérisant les unités fonctionnelles analysées (UFi et UFo), le risque anthropique (valeur de R) correspond à la somme des R obtenus pour chaque variable, conformément à la formule suivante :

$$R(j,j')i = Rj,i + Rj',i$$

Le procédé selon l'invention permet ainsi de connecter l'entropie anthropique et le risque anthropique _R_ produit par $UF_1$, par rapport à $UF_0$.

En effet, si l'on considère chaque flux élémentaire (matérialisé par la mesure d'un paramètre dans S2, induit par une première unité fonctionnelle puis par la mesure du même paramètre dans S2 induit par une deuxième unité fonctionnelle), l'entropie symétrique et le risque asymétrique sont reliés par une équation d'état puisque (i) le risque peut être décrit comme une caractéristique macroscopique de l'environnement dans son interrelation avec une activité humaine (activité industrielle) et (ii) le risque est directement relié à la fonction de distribution des flux (tout comme l'entropie).

La fonction R obtenue, conformément au procédé selon l'invention, permet de calculer le risque anthropique comme une quantité physique qui mesure les effets de l'ensemble S1 (unités fonctionnelles correspondant à l'activité humaine, essentiellement industrielle) sur S2 (environnement). Ces effets ne correspondent pas à une description physique des « dommages » prévisibles ; au sens de la mécanique statistique, ils correspondent à une description statistique de la transformation physique, lorsque l'état de S2 change sous l'effet de la transformation de S1o en S1.

De manière similaire à l'entropie, le risque anthropique n'est pas directement mesurable, mais est calculable à partir de quantités mesurables (les variables ν). Le risque anthropique est une variable extensive, physiquement exprimée, de préférence en bits. Le risque anthropique correspondant à une activité humaine impliquant _N_ variables (ou flux élémentaires de matière et d'énergie) est mathématiquement égale à la somme des _N_ risques anthropiques élémentaires, tels que calculés pour chaque variable.

Le procédé selon l'invention fournit donc une description physique des effets induits par les activités humaines dans le cadre de la mécanique statistique ; cette approche conduit effectivement à une loi universelle de quantification du risque anthropique, quels que soient la dimension du système S1, l'échelle spatio-temporelle et les impacts écologiques futurs. Le procédé s'appuie notamment sur l'hypothèse que les flux de matière et d'énergie peuvent être assimilés à des entités physiques « distinguables », c'est-à-dire comme des « particules » élémentaires (au sens de la mécanique statistique), capables de décrire dans le cadre de la mécanique statistique, les caractéristiques générales du système S2, en flux dynamique permanent avec le système S1. L'une de ces caractéristiques est en particulier le risque anthropique, calculé conformément à la présente invention, dans laquelle il est établi une connexion entre l'entropie associée aux flux de matière et d'énergie d'origine anthropique et le risque anthropique, en brisant la symétrie de l'entropie.

De manière surprenante, le procédé selon la présente invention permet donc de fournir une description unifiée de la modification physique de l'état global de l'environnement, sous l'effet des activités humaines, du fait de l'angle d'analyse sélectionné, qui traite l'ensemble des données à prendre en compte comme un ensemble homogène d'entités, pour analyser l'interaction environnement-homme comme un tout indivisible, ce qui permet effectivement de résoudre le problème de la quantification universelle du risque environnemental.

En effet, contrairement aux démarches actuelles, qui consistent à définir des fonctions d'état de l'environnement qui reflètent des fonctions de dommage, c'est-à-dire des impacts écologiques futurs induits par une modification des critères de répartition de la matière et de l'énergie (par exemple le réchauffement planétaire, la déplétion de la couche d'ozone, la diminution de la biodiversité, l'atteinte à la santé de l'homme, etc.), i) seules les quantités mesurables de transformation physique entre deux états de l'environnement, et ii) seules les perturbations anthropiques dues aux activités humaines doivent être prises en compte dans le procédé selon la présente invention ; toute perturbation naturelle doit être exclue du calcul ; c'est dans ce contexte, qu'il est effectivement possible d'évaluer le risque sur l'environnement des activités humaines.

Par exemple, le procédé selon l'invention permet d'établir une relation quantifiable entre S1 et S2, dans différents états :

- si les modifications, produites par les activités humaines, représentées par une variable $v$, passant de l'état $v_0$ à l'état $v_1$, sont stationnaires ($v_0 = v_1$), $R$ est égal à zéro ($R[v_0 \rightarrow v_1] = 0$) ;
- si les modifications, produites par les activités humaines, représentées par une variable $v$, passant de l'état $v_0$ à l'état $v_1$, ne produisent, à l'échelle macroscopique, globalement, aucun effet, ($v_0 \neq 0$ et $v_1 = 0$), R a une valeur minimale ($R[v_0 \rightarrow 0] = -$) ;
- si les modifications, produites par les activités humaines, représentées par une variable $v$, passant de l'état $v_0$ à l'état $v_1$, sont imprévisibles globalement ($v_0 = 0$ et $v_1 \neq 0$), $R$ a une valeur maximale ($R[0 \rightarrow v_1] = 1$) ;
- si les modifications, produites par les activités humaines, représentées par une variable $v$, passant de l'état $v_0$ à l'état $v_1$, étaient inversées, c'est-à-dire lorsque la variable $v$, passe de l'état $v_1$ à l'état $v_0$, dans ce cas, $R$ serait également inversé ($R[v_0 \rightarrow v_1] = -R[v_1 \rightarrow v_0]$).

Le procédé de mesure du risque anthropique, tel que décrit ci-dessus, présente de nombreuses applications et peut être notamment utilisé dans le but de produire différents effets techniques :

* la comparaison du risque anthropique généré lors de la substitution de $UF_o$ par $UF_i$, ce qui permet de comparer deux systèmes humains existants et interchangeables (par exemple, mais de manière non limitative, lorsque l'on veut comparer la performance environnementale de deux systèmes industriels substituables). A titre d'exemple d'une telle application, on peut citer l'aide au choix d'un système d'emballage plus respectueux de l'environnement (comparaison d'un emballage en matériau 1 et d'un emballage en matériau 2), l'aide à la décision pour le choix d'une filière de traitement des déchets (comparaison du système « recyclage » et du système « incinération », par exemple) induisant le moins de risque environnemental ;
* l'aide au choix des matières premières, matériaux et consommables lors de la conception ou de la reconception de produits (optimisation de la qualité environnementale des produits) ; dans ce cas, on procède par itération successive en modifiant la formule du produit de façon à simuler en temps réel et de façon interactive le risque anthropique associé à chacune des décisions techniques, lors du processus de conception - reconception ;
* et plus généralement, l'aide à l'amélioration de la performance environnementale de tout type d'UF, en simulant successivement ou simultanément un ensemble de paramètres de gestion sur lesquels il est possible d'agir (influence de la composition, des procédés mis en oeuvre, des caractéristiques fonctionnelles, etc.) ; en particulier, dans le cas de l'analyse d'un système de production industriel, il est possible de dresser le « profil forces et faiblesses » comparées (du point de vue du risque anthropique), de chacune des opérations ou de chacun des procédés mis en oeuvre le long de la filière industrielle ;
* des analyses de sensibilité et une recherche des améliorations de la performance environnementale d'une UF donnée ; en modifiant les valeurs des variables techniques influençant la valeur des paramètres de mesure, il est possible d'identifier les variables motrices de la qualité environnementale d'une UF et de quantifier l'impact d'une modification intentionnelle de leurs valeurs ;
* le contrôle de l'efficacité des mesures prises, dans le but de réduire le risque anthropique d'une UF donnée ;
* anticiper l'effet de telle ou telle décision technique sur le risque anthropique induit, en vue de hiérarchiser le profil coût/efficacité des différentes mesures possibles.

Les risques anthropiques élémentaires (i.e. associés à chaque variable d'état ou paramètre de mesure) peuvent, le cas échéant, être affectés de coefficients de pondérations, avant d'être agrégés ; ces coefficients de pondération peuvent être définis selon différents systèmes de valeur ; il est par exemple possible de tenir compte du devenir spatio-temporel réel de chacune des modifications induites sur les critères de répartition des flux de matières et d'énergie.

Outre les dispositions qui précèdent, l'invention comprend encore d'autres dispositions, qui ressortiront de la description qui va suivre, qui se réfère à des exemples de mise en oeuvre du procédé objet de la présente invention ainsi qu'aux dessins annexés, dans lesquels :

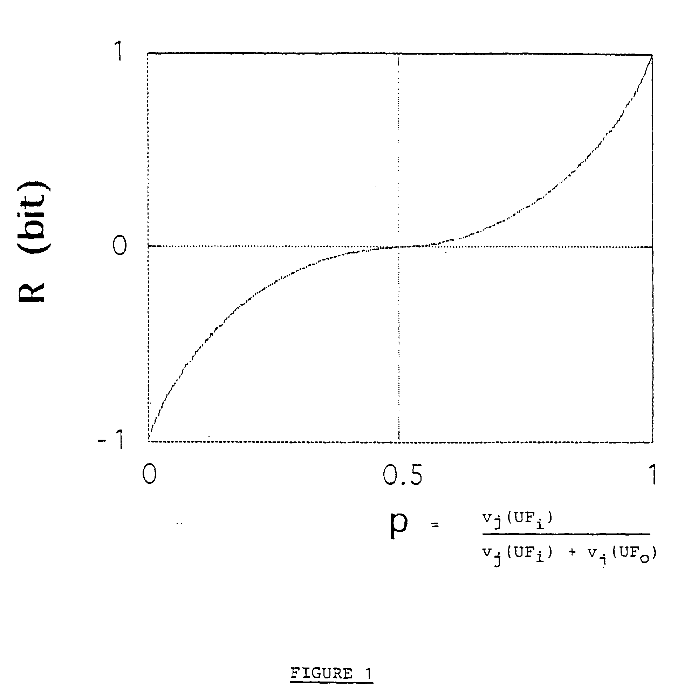

- la figure 1 représente la fonction *R*, en fonction de p($v_j$),
- la figure 2 représente un schéma de la production commerciale de PVC (chlorure de polyvinyle) (Boustead I., 1994, *Eco-profiles of the European Plastic Industry, report 6 : polyvinyl chloride*, *European Centre for Plastics in the Environment*, *Brussels*),

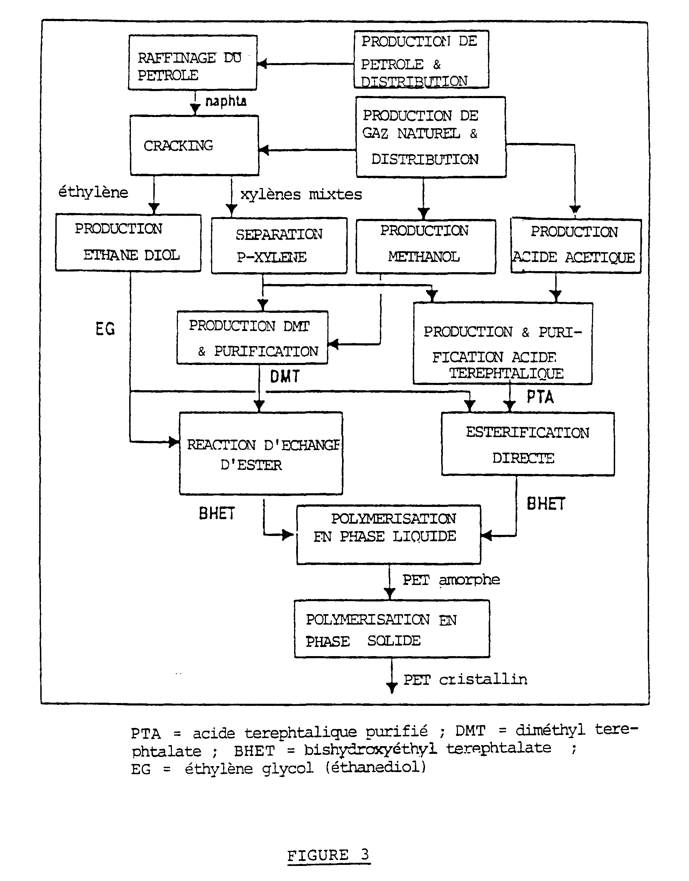

- la figure 3 représente un schéma de la production commerciale de PET (PET amorphe et PET en cristaux) (Boustead I., 1995 *Eco-profiles of the European Plastic Industry*, *report 8 : polyethylene terephtalate*, *European Centre for Plastics in the Environment*, *Brussels*),
- la figure 4 représente le risque anthropique quantitatif du système de production du PVC versus le PET, calculé à partir de données européennes,
- la figure 5 représente le risque anthropique dû à l'émission de polluants atmosphériques dans 4 pays (Royaume-Uni, Norvège, Pays-Bas et USA),

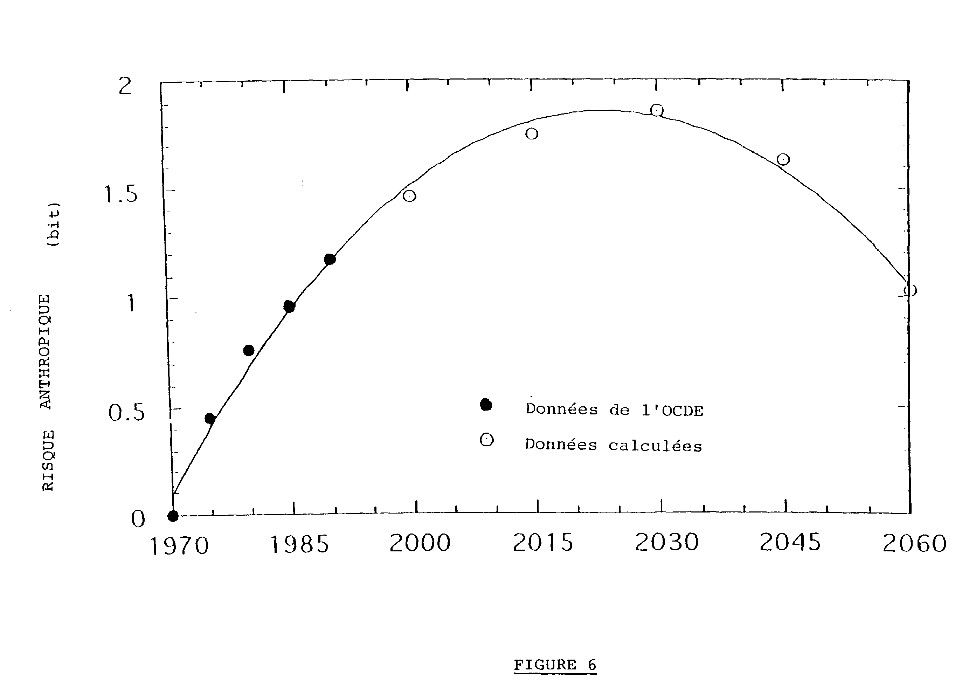

- la figure 6 représente le risque anthropique dû à l'activité humaine dans 24 pays ;
- la figure 7 est un organigramme d'un premier exemple de réalisation du procédé selon la présente invention ;
- la figure 8 est un organigramme d'un deuxième exemple de réalisation d'un procédé selon la présente invention.

Il doit être bien entendu, toutefois, que ces exemples sont donnés uniquement à titre d'illustration de l'objet de l'invention, dont ils ne constituent en aucune manière une limitation.

### EXEMPLE 1 : Évaluation du risque anthropique dans un système de production de deux produits commerciaux.

A une micro-échelle (S1o et S1 = une filière industrielle), le risque anthropique a été mesuré dans le cas du système de production de deux types de matières plastiques, le PVC (S1 ; $UF_1$ = 1 kg de PVC produit) et le PET (S1o ; $UF_0$= 1 kg de PET produit), en se basant sur l'inventaire exhaustif de 44 variables $v$ *(N* = 44) qui a permis de calculer les flux élémentaires de matière et d'énergie échangés entre chacun des systèmes représentés par leurs unités fonctionnelles et l'environnement, c'est à dire aux frontières de ces systèmes de production, depuis l'extraction des ressources naturelles jusqu'à l'élaboration des matériaux.

Données et méthode

Les écobilans de ces deux systèmes ont déjà été publiés (voir Boustead I., 1994 et 1995, précités).

La description physique de ces systèmes de production couvre toutes les opérations jusqu'à la production de la résine polymérique mais exclut les processus situés en aval de cette production.

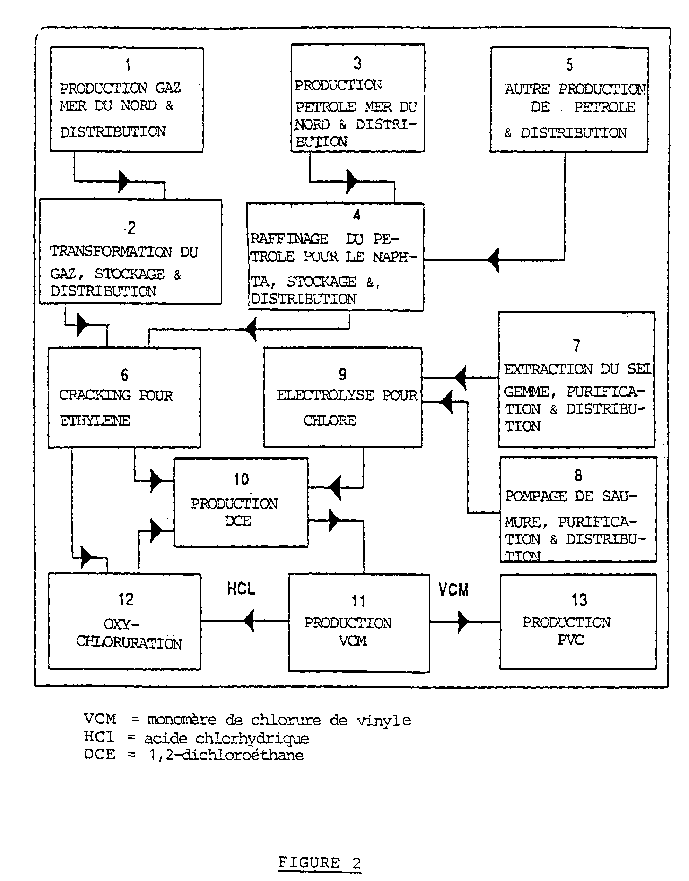

Les principales opérations incluses dans chaque séquence de production sont illustrées aux figures 2 (PVC) et 3 (PET).

L'inventaire de toutes les entrées-sorties aux limites de ce système de production (système de production *versus* environnement) a été enregistré comme présenté dans le Tableau I (entrées et sorties associées à la production commerciale de 1 kg de PVC, moyennées sur l'ensemble des processus de polymérisation et de 1 kg de PET).

Tableau I

|  |  | Unité | PVC moyenne | PET moyenne |
|---|---|---|---|---|
| Combustibles | charbon | MJ | 6,96 | 3,53 |
|  | pétrole | MJ | 6,04 | 15,39 |
|  | gaz | MJ | 15,41 | 15,63 |
|  | eau | MJ | 0,84 | 0,5 |
|  | nucléaire | MJ | 7,87 | 0,74 |
|  | autre | MJ | 0,13 | 0,1 |
| Matières 1ères | pétrole | MJ | 16,85 | 0,01 |
|  | gaz | MJ | 12,71 | 33,16 |
| Matériaux bruts | minerai de fer | mg | 400 | 500 |
|  | calcaire | mg | 1600 | 250 |

Tableau I   (suite)

| | | Unité | PVC moyenne | PET moyenne |
|---|---|---|---|---|
| | eau | mg | 1 900 000 | 17 000 000 |
| | bauxite | mg | 220 | 300 |
| | chlorure de Na | mg | 690 000 | 4 900 |
| | sable | mg | 1 200 | 20 |
| Polluants atmosphériques | poussières | mg | 3 900 | 3 500 |
| | CO | mg | 2 700 | 18 000 |
| | $CO_2$ | mg | 1 944 000 | 2 220 000 |
| | oxydes de soufre | mg | 13 000 | 23 000 |
| | oxydes d'azote | mg | 16 000 | 19 000 |
| | chlore | mg | 2 | 0 |
| | HCl | mg | 230 | 100 |
| | hydrocarbures | mg | 20 000 | 39 000 |
| | métaux | mg | 3 | 10 |
| | dérivés organiques chlorés | mg | 720 | 0 |
| | autres dérivés organiques | mg | 0 | 9 300 |
| Polluants aquatiques | DCO* | mg | 1 100 | 3 100 |
| | DBO** | mg | 80 | 1 000 |
| | acides (en $H^+$) | mg | 110 | 160 |
| | métaux | mg | 200 | 110 |
| | ions chlorures | mg | 40 000 | 710 |
| | dérivés organiques dissous | mg | 1 000 | 13 000 |
| | solides en suspension | mg | 2 400 | 550 |
| | pétrole | mg | 50 | 20 |
| | solides dissous | mg | 500 | 560 |
| | autres dérivés azotés | mg | 3 | 0 |
| | dérivés organiques chlorés | mg | 10 | 0 |
| | hydrocarbures | mg | 0 | 390 |
| | ions sulfate | mg | 4 300 | 40 |
| | ions sodium | mg | 2 300 | 1 500 |
| Déchets solides | déchets industriels | mg | 1 800 | 3 500 |
| | déchets minéraux | mg | 66 000 | 27 000 |
| | scories et cendres | mg | 47 000 | 8 700 |
| | produits chimiques inertes | mg | 14 000 | 1 600 |
| | produits chimiques réglementés | mg | 1 200 | 130 |

* Demande Chimique en Oxygène

** Demande Biologique en Oxygène

Ces données se réfèrent aux flux totaux de matériaux et d'énergie, lorsque les procédés de production sont suivis à travers toutes les opérations à partir de l'extraction des matériaux bruts, dans la terre.

La collecte des données a été réalisée dans toutes les usines de l'industrie des plastiques européennes. Comme précisé dans le Tableau I, les données concernant les émissions de déchets solides, liquides et gazeux ont été collectées et calculées séparément pour chaque émission individuelle.

Dans ce Tableau I, les besoins en énergie ont été analysés en terme de combustibles primaires qui sont extraits à partir du sol ; les différentes têtes de rubrique : charbon, pétrole, gaz, etc... ne font pas référence à ces différentes industries mais aux quantités de charbon, pétrole, gaz, etc... qui sont extraites à partir du sous-sol.

L'énergie des matières premières représente l'énergie des matériaux combustibles qui sont introduits dans le système et utilisés en tant que matériaux plutôt qu'en tant que combustibles.

Le secteur des matériaux bruts dans le Tableau I fait référence aux matériaux bruts primaires qui sont extraits du sol. Les données moyennes présentées dans ce Tableau I sont calculées comme les valeurs moyennes de toutes les usines examinées, pondérées par les sorties de chaque usine et représentent donc la moyenne pondérée de toutes les usines examinées.

Les données sont représentatives d'une moyenne typique de la pratique européenne pendant la période 1989-1990.

L'évaluation de l'évolution de l'état de l'environnement sous l'effet de ces systèmes de production est réalisée conformément à l'invention. Pour les entrées-sorties, les données relatives au système de production du PET sont dénommées $\nu(UF_0)$ (ou $\nu_0$) alors que celles relatives au PVC sont dénommées $\nu(UF_1)$. (ou $\nu_1$)

Le risque anthropique élémentaire est calculé à l'aide de la fonction R telle que définie ci-dessus et comme présenté au Tableau II.

Tableau II

| | | Unité | PVC/PET | |
|---|---|---|---|---|
| Combustibles | charbon | bit | 7,86E-02 | |
| | pétrole | bit | -1,42E-01 | |
| | gaz | bit | -3,62E-05 | |
| | eau | bit | 4,70E-02 | |
| | nucléaire | bit | 5,77E-01 | |
| | autres | bit | 1,23E-02 | |
| sous-total du risque anthropique | | bit | 0,72 | -0,14 |
| Matières 1ères | pétrole | bit | 9,93E-01 | |
| | gaz | bit | -1,49E-01 | |
| sous total du risque anthropique | | bit | 1,71 | -0,29 |
| Matériaux bruts | minerai de fer | bit | -8,92E-03 | |
| | calcaire | bit | 4,29E-01 | |
| | eau | bit | -5,29E-01 | |
| | bauxite | bit | -1,71E-02 | |
| | chlorure de Na | bit | 9,39E-01 | |
| | sable | bit | 8,79E-01 | |
| sous-total du risque anthropique | | bit | 2,25 | -0,56 |
| Polluants atmosphériques | poussières | bit | 2,11E-03 | |
| | CO | bit | -4,41E-01 | |
| | $CO_2$ | bit | -3,17E-03 | |
| | oxydes de soufre | bit | -5,64E-02 | |
| | oxydes d'azote | bit | -5,31E-03 | |
| | chlore | bit | 1,00E+00 | |
| | HCl | bit | 1,15E-01 | |
| | hydrocarbures | bit | -7,62E-02 | |
| | métaux | bit | -2,21E-01 | |
| | dérivés organiques chlorés | bit | 1,00E+00 | |
| | autres dérivés organiques | bit | -1,00E+00 | |
| sous-total du risque anthropique | | bit | 2,12 | -1,80 |
| Polluants aquatiques | DCO | bit | -1,70E-01 | |
| | DBO | bit | -6,19E-01 | |
| | acides (en $H^+$) | bit | -2,49E-02 | |
| | métaux | bit | 6,17E-02 | |
| | ions chlorures | bit | 8,73E-01 | |
| | dérivés organiques dissous | bit | -6,29E-01 | |
| | solides en suspension | bit | 3,06E-01 | |
| | pétrole | bit | 1,37E-01 | |
| | solides dissous | bit | -2,31E-03 | |

Tableau II   (suite)

| | | Unité | PVC/PET | |
|---|---|---|---|---|
| | autres dérivés azotés | bit | 1,00E+00 | |
| | dérivés organiques chlorés | bit | 1,00E+00 | |
| | hydrocarbures | bit | -1,00E+00 | |
| | ions sulfate | bit | 9,24E-01 | |
| | ions sodium | bit | 3,22E-02 | |
| sous-total du risque anthropique | | bit | 4,33 | -2,45 |
| Déchets solides | déchets industriels | bit | -7,55E-02 | |
| | déchets minéraux | bit | 1,31E-01 | |
| | scories et cendres | bit | 3,75E-01 | |
| | produits chimiques inertes | bit | 5,23E-01 | |
| | produits chimiques réglementés | bit | 5,38E-01 | |
| sous-total du risque anthropique | | bit | 1,57 | -0,08 |
| **Total du risque anthropique** | | bit | 11,97 | -5,17 |

Les résultats sont représentatifs de la génération du risque anthropique lorsque l'on remplace le PET par une quantité égale de PVC.

Une valeur positive (respectivement négative) signifie que la génération du risque anthropique est supérieure (respectivement inférieure) dans le système PVC, par rapport au système PET.

Deux ensembles de résultats ont été groupés : dans le premier ensemble (respectivement dans le second), n'ont été considérées que les valeurs positives (respectivement négatives), en tant que valeurs représentatives du risque anthropique additionnel du PVC *versus* PET (respectivement PET *versus* PVC).

Le risque anthropique sectoriel (sous-ensemble V') est calculé pour les secteurs individuels (combustibles, matières premières, matières brutes, polluants atmosphériques, polluants aquatiques, déchets solides) en ajoutant les risques anthropiques élémentaires correspondant séparément pour les deux ensembles de données.

Le risque anthropique total est calculé comme la somme de tous les risques anthropiques élémentaires.

Résultats :

Une différence marquée entre le risque anthropique additionnel généré par les deux systèmes de production est notée (Tableau II).

Le niveau de risque anthropique total du PVC comparé à celui du PET est d'environ 12 bits, tandis que le niveau de risque anthropique total du PET comparé avec le PVC est d'environ 5 bits (nombre de paramètres analysés $N = 44$).

Du point de vue des conséquences sur l'environnement, la production de PVC induit donc 2,3 fois plus de danger potentiel que la production d'une même quantité de PET.

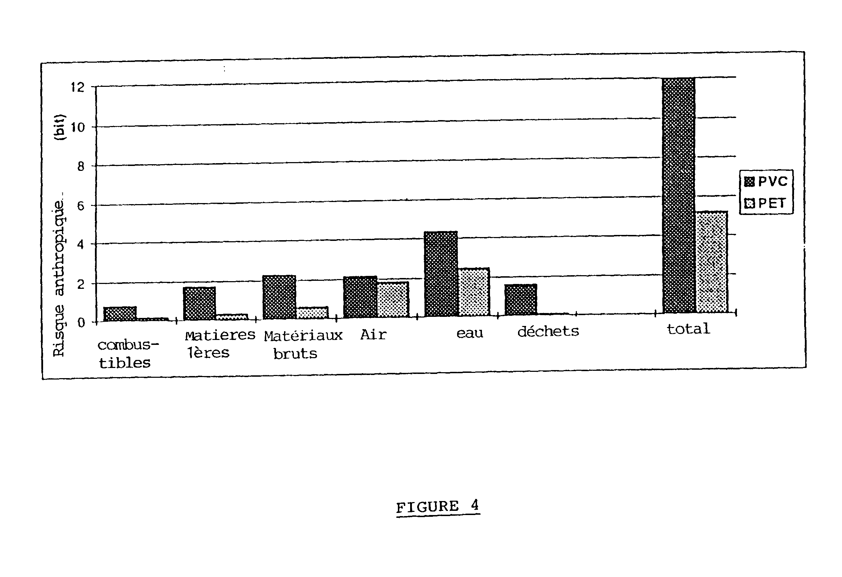

Lorsque l'on se concentre sur les 6 secteurs précités (44 paramètres) de l'inventaire des flux (figure 4), le risque anthropique additionnel du PVC *versus* le PET reste significativement élevé, 0,72 *versus* 0,14 bits pour les combustibles ($N$=6) ; 1,71 *versus* 0,29 bits pour les matières premières ($N$=2) ; *2,25 versus* 0,56 pour les matériaux bruts ($N$=6) ; 2,12 *versus* 1,80 pour les pollutions atmosphériques ($N$=11) ; 4,33 *versus* 2,45 pour les pollutions aquatiques ($N$=14) et 1,57 *versus* 0,08 bits pour les déchets solides ($N$=5).

**EXEMPLE 2** : **Évaluation du risque anthropique dû à l'émission de polluants atmosphériques dans 4 pays ($N$ = 5) ($UF_0$ = année 1975 ; $UF_i$ = année Y ; n=14).**

Données et méthodes

Les données présentées au tableau III sont issues du Compendium des données environnementales (*OECD Environmental Data Compendium, 1995, Paris)*, publié par l'OCDE.

A une méso-échelle **(S1o et S1 = l'ensemble des activités industrielles dans un pays donné),** les données existantes relatives aux émissions de cinq polluants atmosphériques traditionnels [$SO_x$, $NO_x$, particules, CO et COV (= composés organiques volatils)] à l'intérieur des frontières géographiques de 4 pays (USA, Norvège, Danemark, Royaume-Uni) ont permis de tracer la variation annuelle du risque anthropique induit par ce type de pollution, pays par pays depuis deux décennies.

Ces différentes données sont représentées au Tableau III (données exprimées en 1000 tonnes/an).

## TABLEAU III

### Emissions annuelles des polluants atmosphériques traditionnels dans 4 pays

(données de l'OCDE, 1995)

**USA**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | 1000 t | 25510 | 23779 | 22512 | 21212 | 20619 | 21467 | 21219 | 20391 | 20519 | 20948 | 21043 | 20701 | 20660 | 20622 | 19518 |
| NOx | 1000 t | 20330 | 21469 | 21315 | 20571 | 19967 | 20526 | 20338 | 20214 | 20694 | 21440 | 21299 | 21373 | 21240 | 21001 | 21240 |
| Part. | 1000 t | 10960 | 8992 | 8514 | 7605 | 7731 | 8044 | 7812 | 7268 | 7379 | 7901 | 7541 | 7345 | 6982 | 7080 | |
| CO | 1000 t | 104760 | 117032 | 111583 | 105369 | 105200 | 102489 | 97885 | 95159 | 90086 | 89874 | 84727 | 83807 | 82266 | 79092 | 83690 |
| COV | 1000 t | 22530 | 25719 | 24044 | 22556 | 23053 | 23712 | 22691 | 22997 | 22430 | 22698 | 21690 | 21477 | 21232 | 20617 | 20287 |

**Pays-Bas**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | 1000 t | 427 | 489 | 463 | 403 | 323 | 299 | 261 | 263 | 262 | 247 | 208 | 204 | 195 | 170 | 164 |
| NOx | 1000 t | 481 | 584 | 577 | 563 | 556 | 573 | 578 | 588 | 599 | 601 | 590 | 575 | 575 | 566 | 545 |
| Part. | 1000 t | 148 | 143 | 139 | 126 | 110 | 103 | 97 | 89 | 85 | 85 | 80 | 77 | 76 | 53 | 52 |
| CO | 1000 t | 1912 | 1616 | 1504 | 1460 | 1440 | 1443 | 1392 | 1338 | 1278 | 1265 | 1212 | 1108 | 1029 | 947 | 899 |
| COV | 1000 t | 586 | 595 | 570 | 558 | 540 | 529 | 516 | 505 | 500 | 495 | 486 | 439 | 419 | 427 | 411 |

**Norvège**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | 1000 t | 137 | 141 | 127 | 110 | 103 | 95 | 97 | 91 | 74 | 67 | 59 | 54 | 45 | 37 | 36 |
| NOx | 1000 t | 179 | 181 | 177 | 183 | 188 | 204 | 215 | 229 | 237 | 229 | 232 | 230 | 221 | 220 | 229 |
| Part. | 1000 t | 24 | 25 | 22 | 20 | 20 | 21 | 21 | 23 | 23 | 21 | 22 | 22 | 21 | 21 | 21 |
| CO | 1000 t | 732 | 886 | 873 | 894 | 897 | 926 | 962 | 1007 | 1014 | 997 | 955 | 941 | 881 | 849 | 805 |
| COV | 1000 t | 187 | 174 | 186 | 197 | 211 | 224 | 234 | 251 | 253 | 248 | 248 | 266 | 266 | 279 | 284 |

**Royaume-Uni**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | 1000 t | 5368 | 4903 | 4441 | 4216 | 3865 | 3724 | 3729 | 3901 | 3900 | 3825 | 3725 | 3754 | 3564 | 3494 | 3188 |
| NOx | 1000 t | 2245 | 2395 | 2334 | 2318 | 2331 | 2315 | 2420 | 2508 | 2630 | 2706 | 2754 | 2731 | 2632 | 2544 | 2347 |
| Part. | 1000 t | 672 | 560 | 530 | 529 | 511 | 474 | 545 | 574 | 528 | 492 | 479 | 460 | 467 | 458 | 444 |
| CO | 1000 t | 4562 | 4895 | 4941 | 5073 | 5065 | 5171 | 5404 | 5641 | 5915 | 6235 | 6603 | 6537 | 6585 | 6317 | 5641 |
| COV | 1000 t | 2171 | 2277 | 2275 | 2301 | 2304 | 2327 | 2363 | 2416 | 2464 | 2518 | 2570 | 2544 | 2526 | 2463 | 2338 |

Pour chaque pays P, la variable $\nu(UF_0) = \nu_0$ correspond à l'émission d'un polluant atmosphérique donné en 1975 : $\nu(UF_0) = \nu_0 = \nu_{(P,1975)}$ et $\nu(UF_i) = \nu_i$ correspond à l'émission de ce polluant l'année Y : $\nu_i = \nu_{(P,Y)}$.

<u>Résultats</u>

Le calcul du risque anthropique a été effectué de façon indépendante pays par pays. Pour chaque pays, le risque anthropique élémentaire relatif à chacun des cinq polluants (N=5) a été calculé pour chaque unité fonctionnelle c'est-à-dire pour chaque année comprise entre 1980 et 1993 (n=14), en comparaison à l'unité fonctionnelle de référence correspondant à l'année 1975 ; autrement dit, le procédé tel que présenté ci-dessus a été réitéré 14 fois, et ce pour chacun des 4 pays analysés. Les valeurs de R obtenues sont présentées, pays par pays, année par année, et polluant par polluant, au Tableau IV ci-après.

## TABLEAU IV

### Calcul du risque anthropique

**USA**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | bil/an | 0 | -8,90E-04 | -2,81E-03 | -6,11E-03 | -8,12E-03 | -5,35E-03 | -6,09E-03 | -8,99E-03 | -8,50E-03 | -6,97E-03 | -6,65E-03 | -7,83E-03 | -7,97E-03 | -8,11E-03 | -1,28E-02 |
| NOx | bil/an | 0 | 5,36E-04 | 4,04E-04 | 2,50E-05 | -5,85E-05 | 1,66E-05 | 2,79E-08 | -5,90E-06 | 5,68E-05 | 5,09E-04 | 3,91E-04 | 4,51E-04 | 3,46E-04 | 1,90E-04 | 3,46E-04 |
| Part. | bil/an | 0 | -7,03E-03 | -1,14E-02 | -2,37E-02 | -2,16E-02 | -1,71E-02 | -2,04E-02 | -2,98E-02 | -2,77E-02 | -1,91E-02 | -2,48E-02 | -2,83E-02 | -3,58E-02 | -3,36E-02 | |
| CO | bil/an | 0 | 2,21E-03 | 7,18E-04 | 6,06E-06 | -3,17E-06 | -8,66E-05 | -8,30E-04 | -1,66E-03 | -4,10E-03 | -4,22E-03 | -8,08E-03 | -8,92E-03 | -1,05E-02 | -1,41E-02 | -9,04E-03 |
| COV | bil/an | 0 | 3,15E-03 | 7,62E-04 | 2,40E-07 | 9,50E-05 | 4,71E-04 | 9,14E-06 | 7,59E-05 | -3,57E-06 | 9,95E-06 | -2,60E-04 | -4,13E-04 | -6,35E-04 | -1,42E-03 | -1,98E-03 |
| total | bil/an | 0 | -0,002 | -0,012 | -0,030 | -0,030 | -0,022 | -0,027 | -0,040 | -0,040 | -0,030 | -0,039 | -0,045 | -0,054 | -0,057 | |

**Pays-Bas**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | bil/an | 0 | 3,31E-03 | 1,18E-03 | -6,03E-04 | -1,39E-02 | -2,25E-02 | -4,24E-02 | -4,11E-02 | -4,18E-02 | -5,21E-02 | -8,76E-02 | -9,21E-02 | -1,03E-01 | -1,38E-01 | -1,48E-01 |
| NOx | bil/an | 0 | 6,76E-03 | 5,95E-03 | 4,45E-03 | 3,78E-03 | 5,50E-03 | 6,06E-03 | 7,24E-03 | 8,63E-03 | 8,89E-03 | 7,48E-03 | 5,72E-03 | 5,72E-03 | 4,76E-03 | 2,81E-03 |
| Part | bil/an | 0 | -2,13E-04 | -7,09E-04 | -4,66E-03 | -1,57E-02 | -2,33E-02 | -3,15E-02 | -2,26E-02 | -2,87E-02 | -5,34E-02 | -6,52E-02 | -7,31E-02 | -7,59E-02 | -1,68E-01 | -1,73E-01 |
| CO | bil/an | 0 | -5,08E-03 | -1,03E-02 | -1,30E-02 | -1,44E-02 | -1,41E-02 | -1,79E-02 | -2,26E-02 | -2,87E-02 | -3,01E-02 | -3,65E-02 | -5,17E-02 | -6,60E-02 | -8,38E-02 | -9,58E-02 |
| COV | bil/an | 0 | 4,19E-05 | -1,38E-04 | -4,32E-04 | -1,20E-03 | -1,89E-03 | -2,91E-03 | -3,98E-03 | -4,53E-03 | -5,12E-03 | -6,29E-03 | -1,49E-02 | -2,00E-02 | -1,78E-02 | -2,23E-02 |
| total | bil/an | 0 | 0,005 | -0,004 | -0,014 | -0,041 | -0,056 | -0,089 | -0,106 | -0,120 | -0,132 | -0,188 | -0,226 | -0,259 | -0,403 | -0,437 |

**Norvège**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | bil/an | 0 | 1,49E-04 | -1,04E-03 | -8,64E-03 | -1,45E-02 | -2,38E-02 | -2,12E-02 | -2,96E-02 | -6,53E-02 | -8,67E-02 | -1,17E-01 | -1,41E-01 | -1,93E-01 | -2,53E-01 | -2,62E-01 |
| NOx | bil/an | 0 | 1,37E-04 | -2,20E-05 | 8,81E-05 | 4,34E-04 | 3,08E-03 | 6,03E-03 | 1,09E-02 | 1,41E-02 | 1,09E-02 | 1,20E-02 | 1,12E-02 | 7,97E-03 | 7,63E-03 | 1,09E-02 |
| Part. | bil/an | 0 | 3,00E-04 | -1,36E-03 | -5,97E-03 | -5,97E-03 | -3,21E-03 | -3,21E-03 | -3,27E-04 | -3,27E-04 | -3,21E-03 | -1,36E-03 | -1,36E-03 | -3,21E-03 | -3,21E-03 | -3,21E-03 |
| CO | bil/an | 0 | 6,54E-03 | 5,57E-03 | 7,17E-03 | 7,41E-03 | 9,90E-03 | 1,33E-02 | 1,81E-02 | 1,89E-02 | 1,70E-02 | 1,26E-02 | 1,13E-02 | 6,16E-03 | 3,95E-03 | 1,63E-03 |
| COV | bil/an | 0 | -9,36E-04 | -5,18E-06 | 4,89E-04 | 2,62E-03 | 5,85E-03 | 9,01E-03 | 1,55E-02 | 1,63E-02 | 1,42E-02 | 1,42E-02 | 2,21E-02 | 2,21E-02 | 2,83E-02 | 3,08E-02 |
| total | bil/an | 0 | 0,006 | 0,003 | -0,007 | -0,010 | -0,008 | 0,004 | 0,015 | -0,016 | -0,048 | -0,080 | -0,098 | -0,160 | -0,217 | -0,222 |

**Royaume-Uni**

| | | 1975 | 1980 | 1981 | 1982 | 1983 | 1984 | 1985 | 1986 | 1987 | 1988 | 1989 | 1990 | 1991 | 1992 | 1993 |
|---|---|---|---|---|---|---|---|---|---|---|---|---|---|---|---|---|
| SOx | bil/an | 0 | -1,48E-03 | -6,45E-03 | -1,04E-02 | -1,92E-02 | -2,37E-02 | -2,35E-02 | -1,81E-02 | -1,82E-02 | -2,04E-02 | -2,37E-02 | -2,27E-02 | -2,96E-02 | -3,25E-02 | -4,73E-02 |
| NOx | bil/an | 0 | 7,54E-04 | 2,73E-04 | 1,85E-04 | 2,55E-04 | 1,70E-04 | 1,02E-03 | 2,21E-03 | 4,50E-03 | 6,26E-03 | 7,49E-03 | 6,89E-03 | 4,55E-03 | 2,81E-03 | 3,56E-04 |
| Part. | bil/an | 0 | -5,97E-03 | -1,01E-02 | -1,03E-02 | -1,34E-02 | -2,16E-02 | -7,87E-03 | -4,47E-03 | -1,04E-02 | -1,73E-02 | -2,04E-02 | -2,55E-02 | -2,35E-02 | -2,60E-02 | -3,03E-02 |
| CO | bil/an | 0 | 8,95E-04 | 1,15E-03 | 2,03E-03 | 1,97E-03 | 2,83E-03 | 5,16E-03 | 8,08E-03 | 1,21E-02 | 1,74E-02 | 2,42E-02 | 2,30E-02 | 2,39E-02 | 1,89E-02 | 8,08E-03 |
| COV | bil/an | 0 | 4,10E-04 | 3,95E-04 | 6,10E-04 | 6,37E-04 | 8,68E-04 | 1,29E-03 | 2,06E-03 | 2,88E-03 | 3,95E-03 | 5,12E-03 | 4,52E-03 | 4,12E-03 | 2,87E-03 | 9,90E-04 |
| total | bil/an | 0 | -0,005 | -0,015 | -0,018 | -0,030 | -0,041 | -0,024 | -0,010 | -0,009 | -0,010 | -0,007 | -0,014 | -0,021 | -0,034 | -0,068 |

EP 0 916 114 B1

Le risque anthropique total dû aux polluants atmosphériques traditionnels émis dans un pays P au cours de l'année Y (comparativement à l'année de référence 1975) est calculé comme la somme des 5 risques anthropiques élémentaires.

En choisissant, pour chaque pays, comme unité fonctionnelle de référence ($UF_0$), l'état de la perturbation environnementale au cours de l'année 1975 dans le pays considéré, la valeur de la variation annuelle du risque anthropique a partout diminué jusqu'en 1993, avec des trajectoires et des scores significativement différents (Pays-Bas: -0,44 bit/an ; Norvège : -0,22 bit/an; Royaume-Uni : -0,07 bit/an ; USA : -0,05 bit/an).

Les résultats exposés ci-dessus montrent que le risque anthropique annuel lié aux 5 paramètres étudiés (polluants atmosphériques) décroît de 1975 jusqu'au début des années 1990, dans chacun des 4 pays considérés.

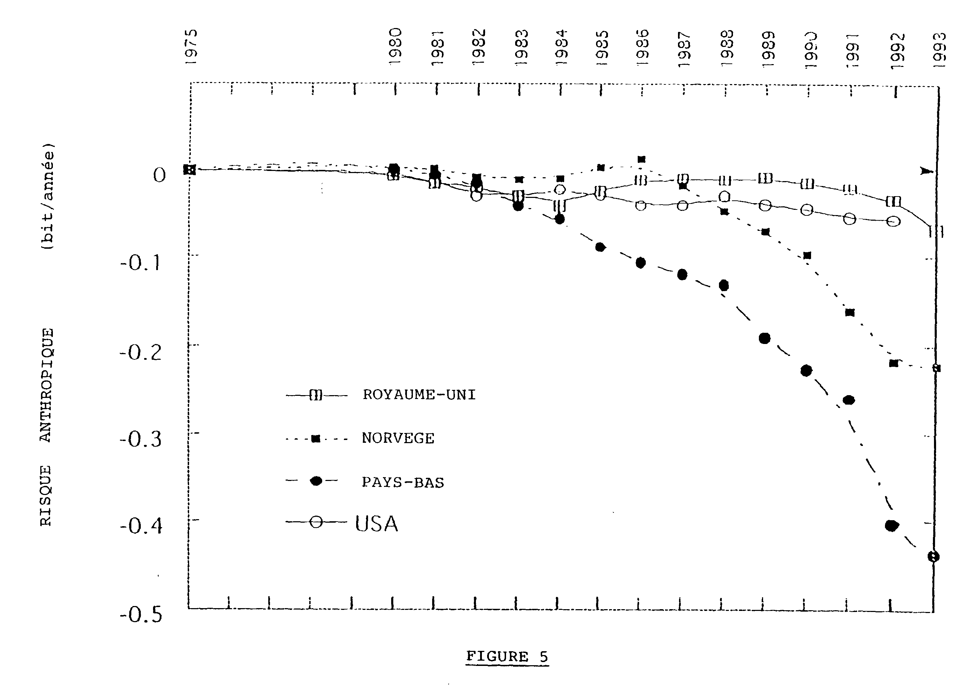

La cinétique de l'évolution du risque anthropique total est illustrée à la figure 5 ; cette figure 5 rassemble sur le même graphe les résultats obtenus indépendamment pour chacun des pays et montre bien la décroissance continue du risque anthropique aux Pays-Bas, en Norvège, au Royaume-Uni et aux USA depuis respectivement 13, 7, 4 et 4 ans, avant 1993 pour ce qui concerne les trois premiers pays cités et avant 1992 pour ce qui concerne les USA.

Si les pollutions dues aux activités humaines continuent à présenter la même trajectoire dans les quatre années à venir, le risque annuel anthropique pour les 4 prochaines années peut être évalué à -0,57, -0,35, -0,13 et -0,08 bit/an, respectivement en 1997 en référence à 1975.

**EXEMPLE 3 : Évaluation du risque anthropique dû à l'activité industrielle, dans 24 pays ($N$= 11 ; UFo = 1975 ; UFi = année Y ; n= 9)**

A une macro-échelle **(S10 et S1 = l'ensemble des activités industrielles dans un groupe de 24 pays),** l'enregistrement des données relatives à 11 flux de matière et d'énergie ($SO_x$, $NO_x$, $CO_2$, déchets municipaux, déchets nucléaires, prélèvements d'eau, consommation apparente d'engrais NPK, de combustibles solides, de pétrole brut, de gaz naturel et d'énergie nucléaire) aux frontières géopolitiques des 24 pays membres de l'OCDE (en 1993), a permis d'établir la trajectoire de l'évolution du risque anthropique global dans l'ensemble de ces pays depuis 1970 jusqu'à l'horizon 2060.

Données et méthodes

Les données fournies par l'OCDE (1970, 1975, 1980, 1985, 1990) (*OECD Environmental Data Compendium, 1993*, *Paris)* sont présentées au Tableau V ci-après.

Ce Tableau V illustre les données obtenues dans 24 pays pour N=11 paramètres (rejets et matière ou énergie consommée).

Pour chaque paramètre $\nu$, la valeur enregistrée en 1970 est utilisée comme année de référence et $\nu_0 = \nu_{(1970)}$ ($UF_0$ = année 1970) ; on désigne la valeur du paramètre pour l'année Y ($UF_i$ = année Y) par $\nu_1 = \nu_{(Y)}$. Pour chacun des 11 paramètres considérés, la valeur de $\nu_1$ relative à l'année Y > 1990 est donnée (dans cet exemple) par $\nu_{(Y)} = \nu_{(1990)} + (Y-1990).(\nu_{(1990)}-\nu_{(1985)})/5$ ; et si cette valeur est négative, on considère que $\nu_{(Y)} = 0$.

Le risque anthropique élémentaire pour chacun des 11 paramètres, pour chaque unité fonctionnelle considérée (1975, 1980, 1985, 1990, 2000, 2015, 2030, 2045, 2060), est calculé à l'aide de la fonction R, comme représenté au Tableau VI. Pour chaque unité fonctionnelle, le risque anthropique total est calculé comme la somme des 11 risques anthropiques élémentaires.

## TABLEAU V

Entrants et sortants correspondant à 12 flux de matière et d'énergie dans 24 pays membres de l'OCDE (1993)

|  |  | 1970 | 1975 | 1980 | 1985 | 1990 | 2000 | 2015 | 2030 | 2045 | 2060 |
|---|---|---|---|---|---|---|---|---|---|---|---|
| SOx | 1000 t | 64 900 | 58 100 | 53 900 | 42 700 | 40 200 | (35 200) | (27 700) | (20 200) | (12 700) | (5 200) |
| NOx | 1000 t | 32 900 | 35 800 | 40 700 | 35 900 | 36 700 | (38 300) | (40 700) | (43 100) | (45 500) | (47 900) |
| CO2 | million t | 8 848 | 9 321 | 10 150 | 9 694 | 10 361 | (11 695) | (13 696) | (15 697) | (17 698) | (19 699) |
| Déchets municipaux | 1000 t | (270 000) | 299 000 | 334 000 | 355 000 | 449 000 | (637 000) | (919 000) | (1 201 000) | (1 483 000) | (1 765 000) |
| Déchets nucléaires | t of HM(*) | (1 400) | (3 400) | 4 400 | 5 465 | 7 446 | (11 408) | (17 351) | (23 294) | (29 237) | (35 180) |
| Polluants aquatiques | Mm3 | 756 900 | 832 000 | 961 000 | 934 100 | 976 000 | (1 059 800) | (1 185 500) | (1 311 200) | (1 436 900) | (1 562 600) |
| Fertilisants (NPK) | 1000 t | 36 271 | 40 725 | 47 477 | 44 752 | 43 927 | (42 277) | (39 802) | (37 327) | (34 852) | (32 377) |
| Combustibles solides | Mtoe (*) | 758 | 754,8 | 886,2 | 950,7 | 1 030 | (1 187) | (1 424) | (1 660) | (1 896) | (2 133) |
| Pétrole brut | Mtoe | 642,3 | 612,8 | 722,2 | 819,9 | 759,3 | (638) | (456) | (275) | (93) | (0) |
| Gaz | Mtoe | 602,5 | 648 | 684,1 | 627 | 688,5 | (812) | (996) | (1 181) | (1 365) | (1 550) |
| Nucléaire | Mtoe | 19,2 | 87,3 | 159,7 | 319,1 | 424,9 | (637) | (954) | (1 271) | (1 589) | (1 906) |

HM = métaux lourds ; toe = tonnes d'équivalent pétrole

## TABLEAU VI

Calcul du risque anthropique

|  |  | 1970 | 1975 | 1980 | 1985 | 1990 | 2000 | 2015 | 2030 | 2045 | 2060 |
|---|---|---|---|---|---|---|---|---|---|---|---|
| SOx | bit / an | 0 | -2,21E-03 | -6,19E-03 | -3,09E-02 | -4,02E-02 | -6,45E-02 | -1,20E-01 | -2,09E-01 | -3,57E-01 | -6,19E-01 |
| NOx | bit / an | 0 | 1,29E-03 | 8,12E-03 | 1,37E-03 | 2,15E-03 | 4,15E-03 | 8,12E-03 | 1,30E-02 | 1,87E-02 | 2,50E-02 |
| CO2 | bit / an | 0 | 4,89E-04 | 3,39E-03 | 1,50E-03 | 4,48E-03 | 1,39E-02 | 3,36E-02 | 5,69E-02 | 8,17E-02 | 1,07E-01 |
| Déchets municipaux | bit / an | 0 | 1,87E-03 | 8,11E-03 | 1,34E-02 | 4,52E-02 | 1,22E-01 | 2,27E-01 | 3,12E-01 | 3,80E-01 | 4,35E-01 |
| Déchets nucléaires | bit / an | 0 | 1,29E-01 | 2,03E-01 | 2,70E-01 | 3,70E-01 | 5,02E-01 | 6,17E-01 | 6,86E-01 | 7,32E-01 | 7,66E-01 |
| Polluants aquatiques | bit / an | 0 | 1,61E-03 | 1,02E-02 | 7,94E-03 | 1,16E-02 | 2,01E-02 | 3,54E-02 | 5,25E-02 | 7,05E-02 | 8,89E-02 |
| Fertilisants (NPK) | bit / an | 0 | 2,42E-03 | 1,30E-02 | 7,92E-03 | 6,58E-03 | 4,22E-03 | 1,55E-03 | 1,49E-04 | -2,87E-04 | -2,32E-03 |
| Combustibles solides | bit / an | 0 | -3,23E-06 | 4,39E-03 | 9,19E-03 | 1,67E-02 | 3,54E-02 | 6,82E-02 | 1,03E-01 | 1,37E-01 | 1,70E-01 |
| Pétrole brut | bit / an | 0 | -3,99E-04 | 2,47E-03 | 1,07E-02 | 5,03E-03 | -7,76E-06 | -2,08E-02 | -1,19E-01 | -4,53E-01 | -1,00E+00 |
| Gaz | bit / an | 0 | 9,55E-04 | 2,90E-03 | 2,86E-04 | 3,20E-03 | 1,58E-02 | 4,42E-02 | 7,72E-02 | 1,11E-01 | 1,45E-01 |
| Nucléaire | bit / an | 0 | 3,19E-01 | 5,08E-01 | 6,86E-01 | 7,43E-01 | 8,09E-01 | 8,60E-01 | 8,88E-01 | 9,07E-01 | 9,19E-01 |
| Total | bit / an | 0 | 0,45 | 0,76 | 0,98 | 1,17 | 1,46 | 1,75 | 1,86 | 1,63 | 1,03 |

Résultats

Jusqu'en 1990, la valeur du risque anthropique généré par chaque période annuelle considérée a augmenté significativement comparativement à l'année de référence (1970) et il a atteint 1,17 bits/an (en 1990), avec un taux de croissance annuelle moyen de 3,8 %. Dans l'hypothèse délibérément simplificatrice où les activités humaines se développeraient au rythme actuel, le risque anthropique additionnel généré chaque année continuerait à croître jusqu'en 2030 (1,86 bits/an), puis diminuerait pour retrouver approximativement sa valeur de 1990, vers la fin des années 2050.

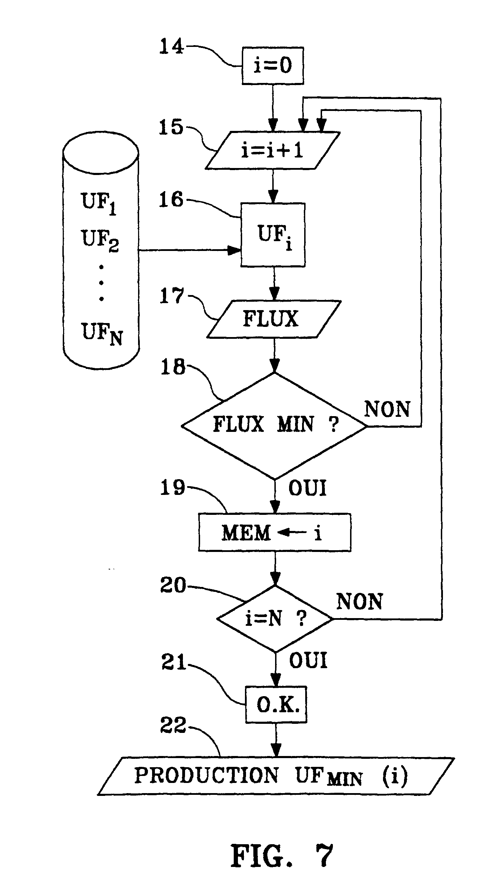

Sur la figure 7, on peut voir l'exemple préféré de réalisation du processus selon la présente invention durant lequel, dans un premier temps, on détermine la manière la moins polluante, ou tout au moins la moins nuisible pour l'environnement, d'effectuer une activité humaine suivie par l'exécution de l'activité de la manière la moins polluante et/ou la moins nuisible pour l'environnement.

Dans l'exemple illustré sur la figure 7, les flux de matières et d'énergie entre le milieu naturel et l'objet de l'activité humaine sont déterminés globalement pour l'ensemble du processus.

En 14, on initialise le compteur du nombre des divers procédés ou étapes de production, de transport, de transformation ou d'emballage envisageables.

On va en 15.

En 15, on incrémente le compteur des procédés ou étapes de production, de transport, de transformation ou d'emballage envisageables.

On va en 16.

En 16, on charge, par exemple à partir d'une base de données, les données pertinentes concernant le premier procédé ou étape de fabrication, de transport, d'emballage ou analogue envisageable.

On va en 17.

En 17, on calcule les flux de matières et d'énergie avec le milieu naturel engendré par l'activité humaine étudiée.

En variante, en 16 on charge directement, lorsque ces données sont disponibles, les valeurs numériques des divers flux de matières et d'énergie avec le milieu naturel engendré par l'activité étudiée ou, au contraire, on effectue des mesures avec des capteurs appropriés. Aux étapes 16 et 17, on peut, apporter des perturbations aux procédés ou étapes étudiés, c'est-à-dire que l'on induit des faibles variations sur les paramètres du processus ou de l'étape étudiée jusqu'à la détermination du processus ou de l'étape induisant des flux minimaux.

On va en 18.

En 18, on vérifie si l'ensemble des flux engendrés par le processus en cours d'analyse ($UF_i$) est minimal.

Si non, on va en 15.

Si oui, on va en 19.

En 19, on mémorise la valeur du processus en cours d'analyse ($UF_i$).

On va en 20.

En 20, on vérifie si tous les processus ont été analysés.

Si non, on va en 15.

Si oui, on va en 21.

En 21, on valide le processus dont l'identification a été stockée en mémoire à l'étape 19.

On va en 22.

En 22, on met en oeuvre le processus le moins polluant ou le moins perturbant pour l'environnement déterminé aux étapes 14 à 20 et validé à l'étape 21. Ce processus peut être un processus de fabrication, de transformation, de transport, d'emballage ou autre.

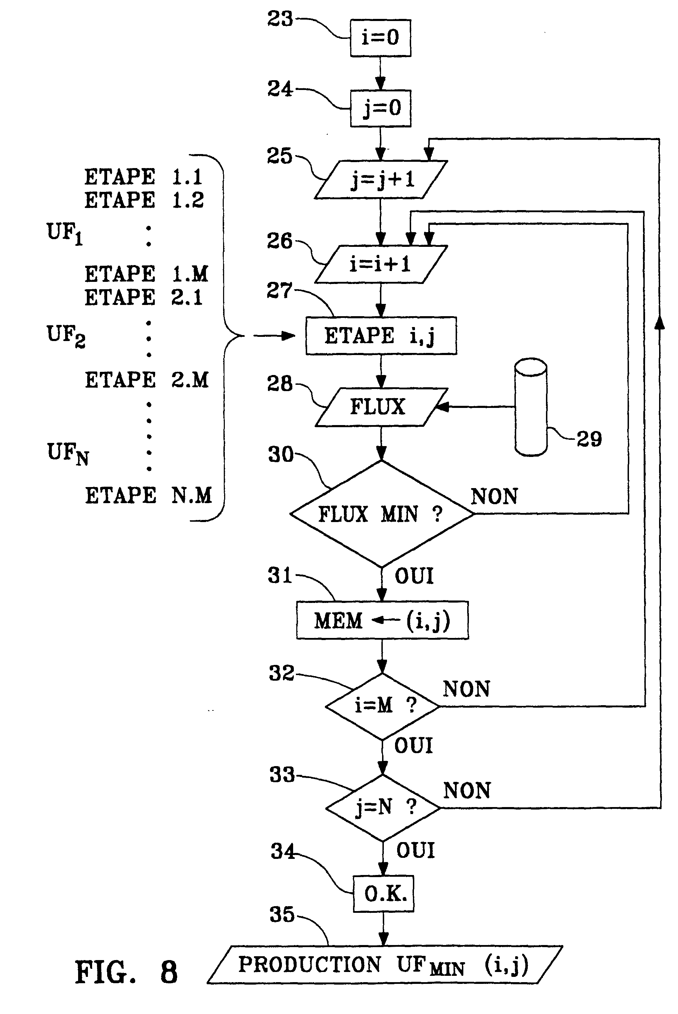

Sur la figure 8, on peut voir une variante de réalisation du procédé selon la présente invention pour lequel les flux d'échange de matières et d'énergie avec l'environnement sont déterminés étape par étape du procédé de fabrication, de transformation, d'emballage ou de transport.

En 23, on initialise le compteur des divers processus susceptibles d'être mis en oeuvre.

On va en 24.

En 24, on initialise le compteur des divers étapes d'un même processus.

On va en 25.

En 25, on incrémente le compteur des étapes successives d'un même processus.

On va en 26.

En 26, on incrémente le compteur des divers processus envisageables.

On va en 27.

En 27, on charge par exemple à partir d'une base de données les données pertinentes concernant l'étape en cours d'analyse du processus en cours d'analyse.

On va en 28.

En 28, on détermine les flux de matières et d'énergie avec l'environnement engendré par l'étape en cours d'analyse du processus en cours d'analyse. Eventuellement, on charge les données concernant un tel flux à partir d'une base 29 ou on effectue une acquisition de données à partir de résultats de mesures délivrés par des capteurs.

On va en 30.

En 30, on vérifie si le flux déterminé à l'étape 28 est minimal.

Si non, on va en 26.

Si oui, on va en 31.

En 31, on mémorise la référence de l'étape du procédé analysé aux étapes 27 et 28 ainsi que les valeurs de flux correspondantes.

On va en 32.

En 32, on vérifie si on a analysé tous les procédés envisagés.

Si non, on va en 26.

Si oui, on va en 33.

En 33, on vérifie si on a analysé toutes les étapes du processus en cours d'analyse.

Si oui, on va en 34.

En 34, on valide un procédé comportant l'ensemble d'étapes dont les flux d'échange de matières et d'énergie avec l'environnement sont minimisés.

On va en 35.

En 35, on met en oeuvre le procédé déterminé aux étapes 27 et 28, mémorisé en 31 et validé en 34.

En variante (non illustrée), lorsque les flux de matières ou d'énergie se compensent entre divers étapes, on en tient compte dans l'évaluation des flux totals.

Ainsi que cela ressort de ce qui précède, l'invention ne se limite nullement à ceux de ces modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

**Revendications**

1. Procédé de fabrication comprenant les étapes :

   a) d'extraction de matières premières nécessaires à une fabrication ;
   b) de traitement de matières premières et la fabrication de produits semi-finis ;
   c) de transformation des produits semi-finis obtenus à l'étape b) **caractérisés en ce qu'**ils comportent en outre les étapes préalables de :
   d) mesure de flux d'échange de matières et d'énergie entre le milieu naturel et les produits fabriqués aux étapes a), b) et c) ; et
   e) sélection des étapes a), b) et c) minimisant les flux d'échange de matières et d'énergie avec l'environnement.

2. Procédé de fabrication selon la revendication 1, **caractérisé en ce que** lors de l'étape e) on assure la perturbation des divers étapes de fabrication, de manière à trouver le procédé correspondant aux flux minimaux d'échange de matières et d'énergie avec l'environnement.

3. Procédé selon l'une des revendications précédentes, **caractérisé en ce que** l'étape de mesure du flux d'échange de matières et d'énergie avec le milieu tient compte de la réalisation de l'outil industriel nécessaire à la mise en oeuvre du procédé.

4. Procédé selon l'une quelconque des revendications précédentes, **caractérisé en ce que** l'étape de mesure du flux d'échange de matières et d'énergie avec le milieu tient compte de la destruction ou de la récupération après l'usage de l'objet fabriqué, de son emballage et de l'outil industriel nécessaire à sa fabrication ou à son transport.

5. Procédé selon l'une quelconque des revendications précédentes, **caractérisé en ce que** l'étape de mesure du flux d'échange de matières et d'énergie avec le milieu tient compte du recyclage des produits usés.

6. Procédé selon l'une quelconque des revendications précédentes, **caractérisé en ce que** l'étape de mesure du flux d'échange de matières et d'énergie avec le milieu est calculée séparemment pour chaque étape du procédé.

7. Procédé selon l'une quelconque des revendications 1 à 5, **caractérisé en ce que** l'étape de mesure des flux d'échange de matières et d'énergie avec le milieu s'effectue globalement pour le procédé avec compensation du flux entrant par le flux sortant.

8. Procédé selon l'une quelconque des revendications précédentes, **caractérisé en ce que** les flux de matières et d'énergie sont affectés des coefficients rendant compte de leur nocivité pour leur environnement.

9. Procédé selon l'une quelconque des revendications précédentes, **caractérisé en ce que** l'étape de mesure de flux d'échange de matières et d'énergie avec l'environnement comprend :

(1) la sélection d'une unité fonctionnelle de référence ($Uf_o$) décrivant un système Slo ;
(2) la sélection d'une unité fonctionnelle $UF_n$ avec $n = i$, parmi un nombre $n$ d'unités fonctionnelles (UF), dont les caractéristiques sont identiques ou similaires et décrivant un système S1, soit : S1 = $\{UF_1, UF_2,..., UF_i, ..., Uf_n\}$ ;
(3) la sélection d'un ensemble $V$, composé de $N$ variables d'état indépendantes ou paramètres de mesure v, pouvant être sous différents états dans un système S2, correspondant à l'environnement, lesquels états sont induits par lesdites unités fonctionnelles, soit : $V = \{v_1, v_2,..., v_j,..., v_N\}$;
(4) la mesure de chacun de ces paramètres dans S2 en référence à chaque unité fonctionnelle sélectionnée en (1) et (2) : soit, $\forall i \in \{o, 1,..., n\}$, S2 $(UF_i) = \{v_1(UF_i), v_2(UF_i),..., v_j(UF_i), ..., v_N(UF_i)\}$, où $v_j(UF_i)$ représente la mesure quantitative du paramètre $v_j$, en référence à $Uf_i$;
(5) le calcul de la quantité de transformation physique $H$j,i ou entropie d'une variation élémentaire de l'environnement S2, pour chaque paramètre $v_j$, en relation avec l'unité fonctionnelle ($UF_i$) sélectionnée en (2), par rapport à l'unité fonctionnelle de référence ($UF_0$), $H$ répondant à la formule suivante:

$$H\text{j,i} = H(v_j(UF_i)) = A - B.[((v_j(UF_i) / v_j(UF_0) + v_j(UF_i))).\log(v_j(UF_i) / (v_j(UF_0) +$$

$$v_j(UF_i))) + (v_j(UF_0) / (v_j(UF_0) + v_j(UF_i))).\log(v_j(UF_0)/(v_j(UF_0) + v_j(UF_i)))],$$

dans laquelle A et B représentent des constantes dimensionnelles de la fonction H ;
(6) le calcul du risque anthropique $R$j,i, pour chaque paramètre $v_j$, pour l'unité fonctionnelle ($UF_i$) sélectionnée en (2), par rapport à l'unité fonctionnelle de référence ($UF_o$), $R$j,i répondant à la formule suivante :

$$R\text{j,i} (UF_o \rightarrow UF_i) = H\text{j,i}_{max} - H\text{j,i, si } v_j(UF_i) \geq v_j(UF_o)$$

ou

$$R\text{j,i} (UF_o \rightarrow UF_i) = H\text{j,i} - H\text{j,i}_{max}, \text{ si } v_j(UF_i) \leq v_j(UF_o),$$

dans laquelle $H$j,i$_{max}$ représente la valeur maximale de $H$j,i en faisant varier la valeur de $v_j(UF_i)$ entre 0 et +∞, lorsque la valeur de $v_j(UF_0)$ est fixée, et
(7) le calcul du risque anthropique total produit par les $N$ variables d'état de l'ensemble $V$, conformément à la formule suivante :

$$R\text{i} (UF_o \rightarrow UF_i) = \sum_{j=1}^{j=N} Rj,i(UF_o \rightarrow UF_i) \, ,$$

les étapes (2) à (7) étant répétées $n$ fois, et
(8) la modification d'au moins un paramètre physique caractérisant l'unité fonctionnelle sélectionnée.

10. Procédé selon la revendication 9, **caractérisé en ce que** les constantes A et B selon l'étape (5) sont respectivement égales à 0 et 1, la fonction logarithme est en base 2 et $H$j,i$_{max}$ selon l'étape (6) est égale à 1, ce qui permet d'exprimer $H$j,i et $R$j,i en bits.

11. Procédé selon la revendication 9 ou la revendication 10, **caractérisé en ce qu'**il comprend en outre, entre l'étape de calcul du risque anthropique $R$j,i pour chaque paramètre $v_j$ et l'étape de calcul du risque anthropique total, une étape de calcul du risque anthropique associé à un sous-ensemble $V'$ de $V$, composé d'un nombre $K$ de paramètres $v_k$ ($K \leq N$), pour l'unité fonctionnelle ($UF_i$) sélectionnée à l'étape (2), par rapport à l'unité fonctionnelle de référence ($UF_0$), conformément à la formule suivante :

$$RV',i\,(UF_o \rightarrow UF_i) = \sum_{k=1}^{k=K} Rk,i\,(UF_o \rightarrow UF_i),\ (\text{étape 6'}).$$

**12.** Procédé selon l'une quelconque des revendications 9 à 11, **caractérisé en ce que** la valeur obtenue à l'étape (7) est renormalisée.

**Patentansprüche**

**1.** Herstellungsverfahren, umfassend die Schritte:

a) der Gewinnung von Ausgangsmaterialien, die für eine Herstellung notwendig sind;
b) der Behandlung bzw. Verarbeitung der Ausgangsmaterialien und der Herstellung von Halbfertigprodukten;
c) der Umwandlung bzw. Verarbeitung der im Schritt b) erhaltenen Halbfertigprodukte, **dadurch gekennzeichnet, dass** es außerdem die folgenden vorgängigen Schritte enthält:
d) Messung des Flusses des Austauschs der Materialien und der Energie zwischen der natürlichen Umgebung und den in den Schritten a), b) und c) hergestellten Produkten; und
e) Auswahl von Schritten a), b) und c), welche den Fluss des Austauschs der Materialien und der Energie mit der Umgebung minimieren.

**2.** Herstellungsverfahren gemäß Anspruch 1, **dadurch gekennzeichnet, dass** man während des Schritts e) die Störung bzw. Schwankung bzw. Abweichung der unterschiedlichen Herstellungsschritte sicherstellt, derart, um das Verfahren zu finden, welches dem minimalen Fluss des Austauschs der Materialien und der Energie mit der Umgebung entspricht.

**3.** Verfahren gemäß einem der vorhergehenden Ansprüche, **dadurch gekennzeichnet, dass** der Schritt der Messung des Flusses des Austauschs der Materialien und der Energie mit der Umgebung die Realisation des industriellen Werkzeugs bzw. Arbeitsmittels, das zum Bewerkstelligen des Verfahrens notwendig ist, berücksichtigt.

**4.** Verfahren gemäß irgendeinem der vorhergehenden Ansprüche, **dadurch gekennzeichnet, dass** der Schritt der Messung des Flusses des Austauschs der Materialien und der Energie mit der Umgebung die Vernichtung bzw. Beseitigung oder die Wiederherstellung bzw. Rückgewinnung nach der Benutzung des hergestellten Objekts, seine Verpackung und das für seine Herstellung oder seinen Transport notwendige industrielle Werkzeug bzw. Arbeitsmittel berücksichtigt.

**5.** Verfahren gemäß irgendeinem der vorhergehenden Ansprüche, **dadurch gekennzeichnet, dass** der Schritt der Messung des Flusses des Austauschs der Materialien und der Energie mit der Umgebung die Wiederherstellung bzw. das Recycling der benutzten Produkten berücksichtigt.

**6.** Verfahren gemäß irgendeinem der vorhergehenden Ansprüche, **dadurch gekennzeichnet, dass** der Schritt der Messung des Flusses des Austauschs der Materialien und der Energie mit der Umgebung separat für jeden Schritt des Verfahrens berechnet wird.

**7.** Verfahren gemäß irgendeinem der Ansprüche 1 bis 5, **dadurch gekennzeichnet, dass** der Schritt der Messung des Flusses des Austauschs der Materialien und der Energie mit der Umgebung global für das Verfahren mit Kompensation des Eingangsflusses durch den Ausgangsfluss bewerkstelligt wird.

**8.** Verfahren gemäß irgendeinem der vorhergehenden Ansprüche, **dadurch gekennzeichnet, dass** den Flüssen der Materialien und der Energie Koeffizienten zugeordnet werden, welche über ihre Schädlichkeit für ihre Umgebung Rechenschaft ablegen.

**9.** Verfahren gemäß irgendeinem der vorhergehenden Ansprüche, **dadurch gekennzeichnet, dass** der Schritt der Messung des Flusses des Austauschs der Materialien und der Energie mit der Umgebung folgendes umfasst:

(1) die Auswahl einer funktionellen Bezugseinheit ($Uf_0$), welche ein System S1o beschreibt;

(2) die Auswahl einer funktionellen Einheit UFn mit n = i, darunter einer Anzahl von n funktionellen Einheiten (UF), deren Charakteristika identisch oder ähnlich sind und die ein System S1 beschreiben, angenommen: S1 = {$UF_1$, $UF_2$, ..., $UF_i$, ... , $Uf_n$};

(3) die Auswahl einer Gesamtheit V, zusammengesetzt aus N unabhängigen Zustandsvariablen oder Messparametern v, die unter unterschiedlichen Zuständen in einem System S2 sein können, entsprechend der Umgebung, welche Zustände durch die genannten funktionellen Einheiten induziert sind, angenommen: V = {$v_1$, $v_2$, ..., $v_j$, ..., $v_N$};

(4) die Messung von jedem dieser Parameter in S2 unter Bezugnahme auf jede in (1) und (2) ausgewählte funktionelle Einheit: angenommen: $\forall$ i $\in$ {o, 1, ..., n}, S2(UFi) = {$v_1$(UFi), $v_2$(UFi), ..., $v_j$(UFi), ..., $v_N$(UFi)}, worin $v_j$(UFi) die quantitative Messung bzw. das quantitative Maß des Parameters $v_j$ unter Bezugnahme auf $Uf_i$ repräsentiert;

(5) die Berechnung der Quantität der physischen bzw. physikalischen Umwandlung bzw. Verarbeitung Hj,i oder der Entropie einer Elementarvariation der Umgebung S2 für jeden Parameter $v_j$, in Relation zu bzw. mit der funktionellen Einheit ($UF_i$), die aus (2) ausgewählt ist, mit Bezug auf die funktionelle Bezugseinheit ($UF'_0$), wobei H mit der folgenden Formel übereinstimmt:

$$Hj,i = H(v_j(UF_i)) = A - B \cdot [((v_j((UF_i) / v_j ((UF_0) +$$

$$v_j (UF_i))) \cdot \log(v_j(UF_i) / (v_j(UF_0) + v_j(UF_i))) + (v_j(UF_0) /$$

$$(v_j(UF_0) + v_j(UF_i))) \cdot \log (v_j((UF_0) / (v_j(UF_0) + v_j(UF_i)))],$$

worin A und B dimensionelle Konstanten der Funktion H repräsentieren;

(6) die Berechnung des anthropogenen Risikos Rj,i für jeden Parameter $v_j$ für die funktionelle Einheit ($UF_i$), ausgewählt aus (2), mit Bezug auf die funktionelle Bezugseinheit ($UF_o$), wobei Rj,i mit der folgenden Formel übereinstimmt:

$$Rj,i (UF_0 \rightarrow UF_i) = Hj,i_{max} - Hj,i, \text{ wenn } v_j(UF_i) \geq v_j(UF_0)$$

oder

$$Rj,i (UF_0 \rightarrow UF_i) = Hj,i - Hj,i_{max}, \text{ wenn } v_j(UF_i) \leq v_j(UF_0),$$

worin $Hj,i_{max}$ den maximalen Wert von Hj,i repräsentiert, indem man den Wert von $v_j$($UF_i$) zwischen 0 und $\infty$ variieren lässt, wenn der Wert von $v_j$($UF_0$) fest ist, und

(7) die Berechnung des gesamten anthropogenen Risikos, das durch die N Zustandsvariablen der Gesamtheit V erzeugt wird, in Übereinstimmung mit der folgenden Formel:

$$Ri\left(UF_o \rightarrow UF_i\right) = \sum_{j=1}^{j=N} Rj,i\left(UF_o \rightarrow UF_i\right) ,$$

wobei die Schritte (2) bis (7) n-mal wiederholt werden, und

(8) die Modifikation von wenigstens einem physischen bzw. physikalischen Parameter, der die ausgewählte funktionelle Einheit charakterisiert.

**10.** Verfahren gemäß Anspruch 9, **dadurch gekennzeichnet, dass** die Konstanten A und B gemäß dem Schritt (5) jeweils gleich 0 and 1 sind, wobei die logarithmische Funktion zur Basis 2 ist und $Hj,i_{max}$ gemäß dem Schritt (6) gleich 1 ist, was es gestattet, Hj,i und Rj,i in Bits auszudrücken.

**11.** Verfahren gemäß Anspruch 9 oder Anspruch 10, **dadurch gekennzeichnet, dass** es außerdem zwischen dem Schritt der Berechnung des anthropogenen Risikos Rj,i für jeden Parameter $v_j$ und dem Schritt der Berechnung des gesamten anthropogenen Risikos einen Schritt der Berechnung des anthropogenen Risikos enthält, welches einer Untergesamtheit $V^1$ von V zugeordnet ist, die aus einer Anzahl von K der Parameter $v_k$ (K $\leq$ N) zusammengesetzt ist, für die funktionelle Einheit (UF$_i$), welche aus dem Schritt (2) ausgewählt ist, mit Bezug auf die funktionelle Bezugseinheit (UF$_0$) in Übereinstimmung mit der folgenden Formel:

$$RV',i\left(UF_0 \rightarrow UF_i\right) = \sum_{k=l}^{k=K} Rk,i\left(UF_o \rightarrow UF_i\right),$$

(Schritt 6').

**12.** Verfahren gemäß irgendeinem der Ansprüche 9 bis 11, **dadurch gekennzeichnet, dass** der in dem Schritt (7) erhaltene Wert renormalisiert wird.

**Claims**

**1.** A method of manufacture comprising the following steps:

a) extracting the raw materials required for manufacture;
b) processing the raw materials and manufacturing semifinished products;
c) transforming the semifinished products obtained in step b), the method being **characterized in that** it further comprises the following prior steps:
d) measuring the flows of materials and energy exchanged between the natural medium and the products manufactured in steps a), b), and c); and
e) selecting steps a), b), and c) that minimize the flows of materials and energy exchanged with the environment.

**2.** A method of manufacture according to claim 1, **characterized in that** during step e) the various manufacturing steps are disturbed so as to find the method which corresponds to the minimum flows of materials and energy exchanged with the environment.

**3.** A method according to any preceding claim, **characterized in that** the step of measuring the flows of materials and of energy takes account of the provision of the industrial tool required for implementing the method.

**4.** A method according to any preceding claim, **characterized in that** the step of measuring the flows of materials and of energy exchanged with the environment takes account of the destruction or the recovery after use of the manufactured object, of its packaging, and of the industrial tool required for manufacturing it or for transporting it.

**5.** A method according to any preceding claim, **characterized in that** the step of measuring the flows of materials and of energy exchanged with the environment takes account of recycling used products.

**6.** A method according to any preceding claim, **characterized in that** the step of measuring the flows of materials and energy exchanged with the environment is calculated separately for each step of the method.

**7.** A method according to any one of claims 1 to 5, **characterized in that** the step of measuring the flows of materials and of energy exchanged with the environment is performed overall for the method with compensation for input flow by output flow.

**8.** A method according to any preceding claim, **characterized in that** the flows of materials and of energy are given coefficients for taking account of their harmfulness to the environment.

**9.** A method according to any preceding claim, **characterized in that** the step of measuring the flows of materials and of energy exchanged with the environment comprises:

(1) selecting a reference functional unit (UF$_0$) describing a system S1$_0$;

(2) selecting a functional unit $UF_n$ with $n = i$, for a number $n$ of functional units (UF) whose characteristics are identical or similar and which describe a system S1, i.e.: $S1 = \{UF_1, UF_2,..., UF_i, ..., UF_n\}$;

(3) selecting a set $V$ made up of $N$ independent state variables or measurement parameters $v$ capable of taking up different states in a system S2 corresponding to the environment, which states are induced by said functional units, i.e.: $V = \{v_1, v_2,..., v_j, ..., v_N\}$;

(4) measuring each of these parameters in S2 relative to each functional unit selected in (1) and (2): i.e. $\forall\ i \in \{0, 1,..., n\}$, $S2\ (UF_i) = \{v_1(UF_i), v_2(UF_i),..., v_j(UF_i), ..., v_N(UF_i)\}$, where $v_j(UF_i)$ represents a quantitative measurement of the parameter $v_j$ with reference to $UF_i$;

(5) calculating the quantity of physical transformation $Hj,i$ or entropy of an elementary variation of the environment S2 for each parameter $v_j$ associated with the functional unit $(UF_i)$ selected in (2), relative to the reference functional unit $(UF_0)$, $H$ satisfying the following formula;

$$Hj,i = H(v_j(UF_i)) = A - B.[(v_j(UF_i) / (v_j(UF_0) + v_j(UF_i))).\log(v_j(UF_i)/(v_j(UF_0)$$

$$+ v_j(UF_i))) + (v_j(UF_0) / (v_j(UF_0) + v_j(UF_i))).\log(v_j(UF_0)/(v_j(UF_0) + v_j(UF_i)))],$$

in which A and B represent dimensional constants of the function H;

(6) calculating the anthropogenic hazard $Rj,i$, for each parameter $v_j$ for the functional unit $(UF_i)$ selected in (2) relative to the reference functional unit $(UF_0)$, $Rj,i$ satisfying the following formula:

$$Rj,i\ (UF_0 \rightarrow UF_i) = Hj,i_{max} - Hj,i, \text{ if } v_j(UF_i) \geq v_j(UF_0)$$

or

$$Rj,i\ (UF_0 \rightarrow UF_i) = Hj,i - Hj,i_{max}, \text{ if } v_j(UF_i) \leq v_j(UF_0),$$

in which $Hj,i_{max}$ represents the maximum value of $Hj,i$ by causing the value of $v_j(UF_i)$ to vary between 0 and $+\infty$, when the value of $v_j(UF_0)$ is fixed;

(7) calculating the total anthropogenic hazard produced by the $N$ state variables of the set $V$, in application of the following formula;

$$Ri\ (UF_0 \rightarrow UF_i) = \sum_{j=1}^{j=N} Rj,i(UF_0 \rightarrow UF_i),$$

steps (2) to (7) being repeated $n$ times; and

(8) modifying at least one physical parameter characterizing the selected functional unit.

**10.** A method according to claim 9, **characterized in that** the constants A and B of step (5) are respectively equal to 0 and 1, the logarithm function is in base 2, and $Hj,i_{max}$ in step (6) is equal to 1, thereby enabling $Hj,i$ and $Rj,i$ to be expressed in bits.

**11.** A method according to claim 9 or claim 10, **characterized in that** it further comprises, between the step of calculating the anthropogenic hazard $Rj,i$ for each parameter $v_j$ and the step of calculating the total anthropogenic hazard, a step of calculating the anthropogenic hazard associated with a subset $V'$ of $V$, made up of a number $K$ of parameters $v_k$ $(K \leq N)$ for the functional unit $(UF_i)$ selected in step (2), relative to the reference functional unit $(UF_0)$, in application of the following formula:

$$RV',i\ (UF_0 \rightarrow UF_i) = \sum_{k=1}^{k=K} Rk,i\ (UF_0 \rightarrow UF_i),\quad (\text{step 6'}).$$

**12.** A method according to any one of claims 9 to 11, **characterized in that** the value obtained in step (7) is renor-malized.

$$p = \frac{v_j(UF_i)}{v_j(UF_i) + v_j(UF_o)}$$

FIGURE 1

| | | |
|---|---|---|
| **1**<br>PRODUCTION GAZ<br>MER DU NORD &<br>DISTRIBUTION | **3**<br>PRODUCTION<br>PETROLE MER DU<br>NORD & DISTRI-<br>BUTION | **5**<br>AUTRE PRODUCTION<br>DE . PETROLE<br>& DISTRIBUTION |

**2**
TRANSFORMATION DU
GAZ, STOCKAGE &
DISTRIBUTION

**4**
RAFFINAGE DU PE-
TROLE POUR LE NAPH-
TA, STOCKAGE &,
DISTRIBUTION

**6**
CRACKING POUR
ETHYLENE

**9**
ELECTROLYSE POUR
CHLORE

**7**
EXTRACTION DU SEL
GEMME, PURIFICA-
TION & DISTRIBU-
TION

**10**
PRODUCTION
DCE

**8**
POMPAGE DE SAU-
MURE, PURIFICA-
TION & DISTRIBU-
TION

HCL

VCM

**12**
OXY-
CHLORURATION

**11**
PRODUCTION
VCM

**13**
PRODUCTION
PVC

VCM = monomère de chlorure de vinyle
HCl = acide chlorhydrique
DCE = 1,2-dichloroéthane

FIGURE 2

PTA = acide terephtalique purifié ; DMT = diméthyl terephtalate ; BHET = bishydroxyéthyl terephtalate ;
EG = éthylène glycol (éthanediol)

FIGURE 3

FIGURE 4

FIGURE 5

EP 0 916 114 B1

FIGURE 6

FIG. 7

FIG. 8